# EUROPÄISCHE PATENTSCHRIFT

(11) **EP 3 240 153 B1**
(45) Veröffentlichungstag und Bekanntmachung des Hinweises auf die Patenterteilung: **20.10.2021**
(21) Anmeldenummer: 17166107.7
(22) Anmeldetag: 11.04.2017
(51) Int. Cl.: F02B 37/18, F02M 26/54, F02M 26/73, H02K 5/20

(54) **STELLVORRICHTUNG**
ACTUATING DEVICE
SYSTÈME DE MANOEUVRE

(30) Priorität: 25.04.2016 DE 102016206955
(43) Veröffentlichungstag der Anmeldung: 01.11.2017
(73) Patentinhaber: Mahle International GmbH, 70376 Stuttgart (DE)
(72) Erfinder: MAKAROW, Eugen, 71636 Ludwigsburg (DE); SALFELD, Edgar, 73669 Lichtenwald (DE); WETZEL, Florian, 73666 Baltmannsweiler (DE)
(74) Vertreter: BRP Renaud & Partner mbB Rechtsanwälte Patentanwälte Steuerberater

(56) Entgegenhaltungen:
- DE-A1-102012 205 754
- DE-A1-102014 106 517
- DE-C2- 3 729 574
- DE-T2- 69 508 153

## Beschreibung

Die vorliegende Erfindung betrifft eine Stellvorrichtung zum mechanischen Betätigen einer Komponente einer Maschine, mit den Merkmalen des Oberbegriffs des Anspruchs 1. Die Erfindung betrifft insbesondere einen Abgasturbolader, der mit einer solchen Stellvorrichtung ausgestattet ist.

Bei einer Vielzahl von Maschinen gibt es Komponenten, die mechanisch betätigt werden müssen, damit die jeweilige Komponente die ihr zugeordnete Funktion innerhalb der jeweiligen Maschine erfüllen kann. Von bevorzugtem Interesse ist als Maschine hierbei ein Abgasturbolader, der als betätigbare Komponente beispielsweise eine variable Turbinengeometrie oder ein Wastegateventil aufweisen kann. Dementsprechend kann ein derartiger Abgasturbolader mit einer Stellvorrichtung ausgestattet sein, um die variable Turbinengeometrie bzw. das Wastegateventil bedarfsabhängig zu betätigen. Selbstverständlich lassen sich auch andere Maschinen mit derartigen Stellvorrichtungen ausstatten. Beispielsweise kann eine Pumpe eine solche Maschine repräsentieren, die als betätigbare Komponente ein Ventil zum Einstellen eines Volumenstroms aufweist. Mit Hilfe der Stellvorrichtung lässt sich dann das Ventil betätigen. Ebenso ist denkbar, eine Abgasrückführung als Maschine aufzufassen, die als betätigbare Komponente ein Abgasrückführventil zum Einstellen einer Abgasrückführrate aufweist. Auch diese Maschine kann mit einer Stellvorrichtung zum Betätigen des Abgasrückführventils ausgestattet sein.

Stellvorrichtungen, die sich zum mechanischen Betätigen einer Komponente einer Maschine eignen, umfassen grundsätzlich ein Gehäuse und einen im Gehäuse angeordneten Elektromotor zum Antreiben eines außen am Gehäuse angeordneten Stellglieds, das zum Koppeln mit der jeweiligen, zu betätigenden Komponente vorgesehen ist. Elektromotoren zeichnen sich durch ihre hohe Zuverlässigkeit aus. Im Gehäuse können weitere Bauteile der Stellvorrichtung angeordnet sein, wie beispielsweise ein Getriebe, das antriebsmäßig zwischen einer Antriebswelle des Elektromotors und dem jeweiligen Stellglied angeordnet ist. Ebenso kann im Gehäuse eine Sensorik zum Erkennen einer aktuellen Position oder Drehlage des Stellglieds relativ zum Gehäuse angeordnet sein.

Je nach Anwendungsfall kann eine derartige Stellvorrichtung relativ hohen Umgebungstemperaturen ausgesetzt sein. Bekanntermaßen hängt die Lebensdauer elektrischer und elektronischer Bauteile stark von der Betriebstemperatur ab; je höher die Betriebstemperatur, desto kürzer die Lebensdauer. Bei einer Stellvorrichtung mit Elektromotor kommt erschwerend hinzu, dass der Elektromotor während seines Betriebs selbst Wärme erzeugt.

Die Stellvorrichtung ist für eine Montage an der jeweiligen Maschine vorgesehen, deren Komponente mit der Stellvorrichtung betätigt werden soll. Es ist daher zweckmäßig, am Gehäuse einer derartigen Stellvorrichtung zum einen erste bzw. primäre Befestigungsstellen oder Befestigungsmittel oder Befestigungseinrichtungen vorzusehen, mit denen das Gehäuse bzw. die Stellvorrichtung an der jeweiligen Maschine befestigt werden kann.

Zur Qualitätssicherung kann vorgesehen sein, die Stellvorrichtung vor ihrer Montage an der jeweiligen Maschine im Hinblick auf ihre ordnungsgemäße Funktion zu überprüfen. Bei einem mehrteiligen Gehäuse ist es dabei von Vorteil, wenn die separaten Gehäuseteile für diese Funktionsüberprüfung bereits aneinander befestigt sind. Die Befestigung der Gehäuseteile aneinander im Rahmen der Montage der Stellvorrichtung erleichtert auch die Logistik, nämlich die Lagerhaltung und den Transport, beispielsweise vom Ort der Herstellung zum Ort der Funktionsüberprüfung sowie vom Ort der Funktionsüberprüfung zum Ort der Montage an der jeweiligen Maschine. Dementsprechend können zusätzlich zu den vorstehend genannten primären Befestigungsstellen zweite bzw. sekundäre Befestigungsstellen oder Befestigungsmittel oder Befestigungseinrichtungen vorgesehen sein, die es ermöglichen, die Gehäuseteile aneinander zu befestigen. Problematisch ist dabei der hierzu erforderliche Aufwand im Rahmen der Herstellung der Stellvorrichtung. Werden nämlich zum Beispiel Schraubverbindungen für die primären und sekundären Befestigungsstellen verwendet, müssen für die primären und für die sekundären Befestigungsstellen jeweils entsprechende Durchgangsöffnungen bzw. Gewindeöffnungen vorgesehen werden, wozu vergleichsweise viel Bauraum benötigt wird. Außerdem erhöhen sich dadurch die Kosten, da mehr Bauteile zu verbauen sind und mehr Montageschritte erforderlich sind.

Aus der WO 2015/169459 A1 ist ein mit einem Wastegateventil ausgestatteter Abgasturbolader bekannt, dessen Lagergehäuse einen Kühlkanal enthält, wobei eine Zulaufleitung zu diesem Kühlkanal und eine Ablaufleitung von diesem Kühlkanal jeweils durch ein Gehäuse einer Stellvorrichtung zum Betätigen des Wastegateventils hindurchgeführt sind, um so gleichzeitig einen Elektromotor dieser Stellvorrichtung zu kühlen. Anschlüsse für Einlass und Auslass des Kühlmittels sind ebenfalls am Gehäuse der Stellvorrichtung ausgebildet.

Eine gattungsgemäße Stellvorrichtung ist aus der DE 10 2014 106 517 A1 bekannt. Sie umfasst ein Gehäuse, das ein erstes Gehäuseteil und ein zweites Gehäuseteil aufweist, sowie einen im Gehäuse angeordneten Elektromotor zum Antreiben eines außen am Gehäuse angeordneten Stellglieds zum Koppeln mit der zu betätigenden Komponente. Im Gehäuse ist ein Kühlkanal für ein flüssiges Kühlmittel ausgebildet, der mit einem außen am Gehäuse vorgesehenen Kühlmitteleinlassanschluss und mit einem außen am Gehäuse vorgesehenen Kühlmittelauslassanschluss fluidisch verbunden ist. Der Elektromotor ist im zweiten Gehäuseteil angeordnet und ragt zumindest mit seiner Antriebswelle axial in das erste Gehäuseteil hinein, wobei der Kühlkanal am zweiten Gehäuseteil vorgesehen ist.

Die vorliegende Erfindung beschäftigt sich mit dem Problem, für eine Stellvorrichtung der vorstehend genannten Art eine verbesserte oder zumindest eine andere Ausführungsform anzugeben, die sich insbesondere durch eine reduzierte thermische Belastung des Elektromotors bei preiswerter Herstellbarkeit der Stellvorrichtung auszeichnet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die Erfindung beruht auf dem allgemeinen Gedanken, im Gehäuse einen Kühlkanal für ein flüssiges Kühlmittel auszubilden, der mit einem außen am Gehäuse vorgesehenen Kühlmitteleinlassanschluss und mit einem außen am Gehäuse vorgesehenen Kühlmittelauslassanschluss fluidisch verbunden ist. Mit Hilfe eines derartigen Kühlkanals lässt sich sehr effizient Wärme vom Gehäuse abführen, was die thermische Belastung elektrischer und/oder elektronischer Komponenten der Stellvorrichtung erheblich reduziert. Ferner wird vorgeschlagen, das Gehäuse mehrteilig, jedoch zumindest zweiteilig auszugestalten, so dass es ein erstes Gehäuseteil und ein zweites Gehäuseteil aufweist. Zur besonders einfachen Herstellbarkeit der Stellvorrichtung wird außerdem vorgeschlagen, den Elektromotor im zweiten Gehäuseteil anzuordnen, derart, dass er zumindest mit seiner Antriebswelle axial in das erste Gehäuseteil hineinragt. Ferner wird der Kühlkanal am zweiten Gehäuseteil vorgesehen, so dass die Wärme gezielt dort abgeführt werden kann, wo sie entsteht bzw. wo sie am meisten stört, nämlich im Bereich des Elektromotors. Des Weiteren wird das erste Gehäuseteil aus Kunststoff hergestellt, wodurch die Stellvorrichtung insgesamt preiswert realisierbar ist. Der Kühlkanal kann im zweiten Gehäuseteil zweckmäßig so angeordnet sein, dass er den Elektromotor in der Umfangsrichtung um mindestens 180° umgreift.

Besonders vorteilhaft ist eine Weiterbildung, bei welcher die beiden Anschlüsse für Kühlmitteleinlass und Kühlmittelauslass am zweiten Gehäuseteil vorgesehen sind. Die Unterbringung des Kühlkanals und der zugehörigen Anschlüsse bzw. in nur einem der beiden Gehäuseteile vereinfacht die Realisierung einer derartigen aktiven Kühlung der Stellvorrichtung. Erfindungsgemäß ist vorgesehen, dass der Kühlmitteleinlassanschluss an dem einen Gehäuseteil vorgesehen ist, während der Kühlmittelauslassanschluss am anderen Gehäuseteil vorgesehen ist. Diese Maßnahme kann die Anpassung an unterschiedliche Einbausituationen vereinfachen.

Erfindungsgemäß ist das zweite Gehäuseteil aus Kunststoff hergestellt, wobei der Kühlkanal radial außen direkt durch eine den Elektromotor in Umfangsrichtung umschließende Umfangswand des zweiten Gehäuseteils begrenzt ist. Die Nutzung der Umfangswand des zweiten Gehäuseteils zur Begrenzung des Kühlkanals und die Ausgestaltung des zweiten Gehäuseteils als Kunststoffbauteil führen zu einer preiswerten Herstellbarkeit des zweiten Gehäuseteils und somit des Gehäuses mit integriertem Kühlkanal. Erfindungsgemäß ist in das zweite Gehäuseteil eine Blechschale axial eingesetzt, wobei der Elektromotor in diese Blechschale axial eingesetzt ist und der Kühlkanal radial zwischen der Blechschale und dem zweiten Gehäuseteil ausgebildet ist. Eine derartige Blechschale ist definiert durch einen schalenartigen, dünnwandigen Körper aus Metall. Die insoweit metallische Blechschale besitzt eine hohe Wärmeleitfähigkeit und verbessert somit die Wärmeleitung vom Elektromotor in das Kühlmittel. Ferner ermöglicht die Verwendung einer solchen Blechschale eine preiswerte Herstellung des Kühlkanals im zweiten Gehäuseteil, das im Übrigen aus Kunststoff hergestellt sein kann.

Gemäß einer Weiterbildung kann dann der Kühlkanal radial innen direkt durch eine den Elektromotor in Umfangsrichtung umschließenden Mantel der Blechschale begrenzt sein. Somit steht die Blechschale im Bereich ihres Mantels unmittelbar mit dem Kühlmittel in Kontakt, was die Wärmeübertragung verbessert.

Erfindungsgemäß liegt ein den Elektromotor in Umfangsrichtung umschließender Mantel der Blechschale radial am Mantel des Elektromotors direkt an. Hierdurch wird ein direkter Kontakt zwischen Elektromotor und Blechschale erzeugt, was die Wärmeübertragung vom Elektromotor in die Blechschale verbessert. Gemäß einer weiteren Ausführungsform kann die Blechschale topfförmig ausgestaltet sein und an einer vom ersten Gehäuseteil abgewandten Seite durch einen Boden axial verschlossen sein. Zusätzlich oder alternativ kann die Blechschale einen Aufnahmeraum bilden, in den der Elektromotor axial eingesteckt ist und der nur an einer dem ersten Gehäuseteil zugewandten Seite offen ist. Mit anderen Worten, die topfförmige Blechschale ist bevorzugt ausschließlich an einer dem ersten Gehäuseteil zugewandten Axialseite offen, um den Elektromotor in den Aufnahmeraum einsetzen zu können. Boden und Mantel der Blechschale sind geschlossen bzw. kontinuierlich ausgeführt, also unperforiert. Hierdurch ist der Elektromotor dicht vom Kühlkanal getrennt, so dass ein preiswerter Elektromotor verwendet werden kann, der selbst kein flüssigkeitsdichtes Gehäuse besitzt.

Bei einer anderen Ausführungsform kann die Blechschale an einer dem ersten Gehäuseteil zugewandten Seite einen radial nach außen abstehenden, umlaufenden Kragen aufweisen. Zweckmäßig ist nun eine Ausgestaltung, bei welcher der Kühlkanal axial an einer dem ersten Gehäuseteil zugewandten Seite durch besagten Kragen direkt begrenzt ist. Bei dieser Ausführungsform ist der Kühlkanal somit radial nach innen und axial zum ersten Gehäuseteil hin durch Bereiche der Blechschale, nämlich durch besagten Mantel und besagten Kragen direkt begrenzt. Hierdurch vereinfacht sich die Realisierung des Kühlkanals innerhalb des zweiten Gehäuseteils.

Gemäß einer Weiterbildung kann das zweite Gehäuseteil an einer dem ersten Gehäuseteil zugewandten Seite einen umlaufenden Flansch aufweisen, der bspw. dazu genutzt werden kann, dass zweite Gehäuseteil am ersten Gehäuseteil zu befestigen. Zweckmäßig kann sich der zuvor genannte Kragen der Blechschale radial bis in den Bereich des Flansches erstrecken und axial am Flansch anliegen. Hierdurch vereinfacht sich die toleranzbehaftete Herstellung des zweiten Gehäuseteils. Außerdem können sich Blechschale und Gehäuseteil aufgrund unterschiedlicher Materialien bei Temperaturschwankungen unterschiedlich ausdehnen, was durch diese Bauweise zumindest im Bereich des Kragens und des Flansches in radialer Richtung möglich ist, ohne dass es dabei zu unzulässig hohen Spannungen kommt.

Vorteilhaft ist eine Weiterbildung, bei der eine umlaufende Außendichtung axial zwischen dem Kragen und dem Flansch angeordnet ist. Zusätzlich oder alternativ kann an einer vom ersten Gehäuseteil axial abgewandten Seite des Kühlkanals eine umlaufende Innendichtung radial zwischen dem Mantel und der Umfangswand angeordnet sein. Eine derartige Innendichtung kann dabei unabhängig davon vorgesehen sein, ob die Blechschale den genannten Kragen und/oder ob das zweite Gehäuseteil den genannten Flansch aufweist. Die Außendichtung und die Innendichtung sind vorzugsweise als separate Dichtungen realisiert, die an der gewünschten Stelle in das zweite Gehäuseteil eingesetzt sind. Alternativ dazu ist es ebenso möglich, zumindest eine dieser Dichtungen an der vorgesehenen Stelle an das zweite Gehäuseteil anzuspritzen oder anzuschäumen. Sofern diese Dichtungen als separate Bauteile vorgesehen sind, kann das zweite Gehäuseteil für die Positionierung der jeweiligen Dichtung mit einer umlaufenden Nut ausgestattet sein, um die Außendichtung bzw. die Innendichtung einzusetzen.

Gemäß einer anderen Ausführungsform kann der Kühlkanal axial an einer vom ersten Gehäuseteil abgewandten Seite durch eine umlaufende Ringstufe des zweiten Gehäuseteils direkt begrenzt sein. Zweckmäßig ist somit eine Ausführungsform, bei welcher der Kühlkanal radial außen und axial an der vom ersten Gehäuseteil abgewandten Seite durch Bereiche des zweiten Gehäuseteils, nämlich durch die besagte Umfangswand und durch die besagte Ringstufe direkt begrenzt ist. Dies vereinfacht die Realisierung des Kühlkanals im zweiten Gehäuseteil.

Bei einer nicht erfindungsgemäßen Ausführungsform kann der Elektromotor einen flüssigkeitsdichten, in der Umfangsrichtung umlaufenden Mantel aufweisen, wobei der Kühlkanal radial innen direkt durch den Mantel begrenzt ist. Bei dieser Bauweise kann auf die vorstehend genannte Blechschale verzichtet werden, so dass insgesamt weniger Bauteile benötigt werden, um den Kühlkanal im zweiten Gehäuseteil zu realisieren.

Gemäß einer Weiterbildung kann optional vorgesehen sein, dass der Kühlkanal im zweiten Gehäuseteil an einer dem ersten Gehäuseteil zugewandten Seite axial offen ist und dort durch das erste Gehäuseteil axial verschlossen ist. Mit anderen Worten, der Kühlkanal ist in diesem Fall axial an der dem ersten Gehäuseteil zugewandten Seite durch das erste Gehäuseteil direkt begrenzt. Auch diese Maßnahme vereinfacht die Realisierbarkeit des Kühlkanals innerhalb des Gehäuses.

Vorteilhaft ist eine Weiterbildung, bei der an einer vom Elektromotor radial abgewandten Seite des Kühlkanals eine umlaufende Außendichtung axial zwischen dem ersten Gehäuseteil und dem zweiten Gehäuseteil angeordnet ist. Zusätzlich oder alternativ kann an einer vom ersten Gehäuseteil axial abgewandten Seite des Kühlkanals eine umlaufende Innendichtung radial zwischen dem Mantel des Elektromotors und der Umfangswand angeordnet sein. Auch hier ist es grundsätzlich möglich, die beiden Dichtungen als separate Bauteile zu realisieren. Zur Positionierung der jeweiligen Dichtung kann am ersten Gehäuseteil oder am zweiten Gehäuseteil eine hierfür geeignete Nut ausgebildet sein. Ebenso ist es möglich die Außendichtung und/oder die Innendichtung an das erste Gehäuseteil bzw. an das zweite Gehäuseteil anzuspritzen oder anzuschäumen.

Gemäß einer anderen Ausführungsform kann an einer dem ersten Gehäuseteil axial zugewandten Seite des Kühlkanals eine umlaufende Ringdichtung radial zwischen dem Mantel des Elektromotors und dem ersten Gehäuseteil angeordnet sein. Eine derartige Ringdichtung kann zusätzlich oder alternativ zu der vorstehend genannten Außendichtung und/oder zu der vorstehend genannten Innendichtung vorgesehen sein. Mit Hilfe dieser Ringdichtung erfolgt eine Abdichtung des Kühlkanals gegenüber einem Innenraum des ersten Gehäuseteils, in den der Elektromotor zumindest im Bereich seiner Antriebswelle axial hineinragt.

Bei einer vorteilhaften Weiterbildung kann die genannte Ringdichtung an einem umlaufenden Ringsteg des ersten Gehäuseteils abgestützt sein, der axial in das zweite Gehäuseteil vorsteht und der den Kühlkanal axial begrenzt. Mit Hilfe eines derartigen Ringstegs vereinfacht sich die Positionierung der Ringdichtung. Beispielsweise kann in den Ringsteg eine umlaufende Ringnut eingearbeitet sein, in welche die Ringdichtung eingelegt ist. Ebenso kann die Ringdichtung an den Ringsteg angespritzt oder angeschäumt sein.

Vorteilhaft ist eine Weiterbildung, bei welcher der Ringsteg radial außen am zweiten Gehäuseteil radial abgestützt ist. Hierdurch wird mit Hilfe des Ringstegs eine Zentrierung zwischen erstem Gehäuseteil und zweiten Gehäuseteil realisiert, was die Herstellung vereinfacht.

Bei einer weiteren nicht erfindungsgemäßen Ausführungsform kann das zweite Gehäuseteil an einer vom ersten Gehäuseteil abgewandten Seite des Kühlkanals aus Kunststoff hergestellt sein und zumindest an einen Axialabschnitt eines in Umfangsrichtung umlaufenden Mantels des Elektromotors angespritzt sein. Mit anderen Worten, das zweite Gehäuseteil wird im Rahmen seiner Herstellung zumindest an den Mantel des Elektromotors angespritzt. Beispielsweise kann der Elektromotor hierzu als so genannter "Einleger" in die Spritzform, die zum Spritzformen des zweiten Gehäuseteils verwendet wird, eingesetzt werden, bevor der Kunststoff zum Herstellen des zweiten Gehäuseteils in die Spritzform eingespritzt wird. Durch das Anspritzen des zweiten Gehäuseteils an den Elektromotor wird eine dichte Verbindung zwischen Elektromotor und zweitem Gehäuseteil realisiert. Durch eine entsprechende Formgebung am Mantel des Elektromotors kann auch eine drehmomentübertragende Verbindung zwischen dem Elektromotor und dem zweiten Gehäuseteil erreicht werden. Hierdurch kann das vom Elektromotor an seiner Antriebswelle bereitgestellte Drehmoment am zweiten Gehäuseteil abgestützt werden. Zweckmäßig kann das zweite Gehäuseteil an den ganzen axial an den Kühlkanal anschließenden Bereich des Elektromotors angespritzt sein.

Bei einer alternativen nicht erfindungsgemäßen Ausführungsform kann ein metallischer Einsatz vorgesehen sein der den Kühlkanal, den Kühlmitteleinlassanschluss und den Kühlmittelauslassanschluss aufweist. Dieser Einsatz kann in dem aus Kunststoff hergestellten zweiten Gehäuseteil angeordnet sein, wobei dann der Kühlmitteleinlassanschluss und der Kühlmittelauslassanschluss durch das zweite Gehäuseteil hindurch nach außen geführt sind. Der Einsatz lässt z.B. aus mehreren Blechformteilen zusammenbauen. Ebenso lässt er sich auf jede beliebige andere geeignete Weise herstellen. Durch diesen Vorschlag wird ein vormontierbarer Einsatz vorgestellt, der den Kühlkanal, den Kühlmitteleinlassanschluss und den Kühlmittelauslassanschluss umfasst. Dieser Einsatz lässt sich besonders einfach dicht herstellen, so dass zusätzliche Abdichtungsmaßnahmen innerhalb des Gehäuses hinsichtlich des Kühlmittels entbehrlich sind. Alle übrigen Funktionen des zweiten Gehäuseteils werden durch den aus Kunststoff hergestellten Bereich des zweiten Gehäuseteils realisiert, wodurch das zweite Gehäuseteil insgesamt preiswert realisierbar ist. Beispielsweise erfolgt die Fixierung der beiden Gehäuseteile aneinander in einem Bereich, in dem das zweite Gehäuseteil aus Kunststoff hergestellt ist.

Zweckmäßig ist der Einsatz als separates Bauteil in das zweite Gehäuseteil eingesetzt ist. Hierdurch ergibt sich eine vereinfachte Montage. Alternativ kann auch vorgesehen sein, dass das zweite Gehäuseteil an den Einsatz angespritzt ist. In diesem Fall wird der Einsatz als "Einleger" in der Spritzform zum Herstellen des zweiten Gehäuseteils angeordnet bevor der Kunststoff eingespritzt wird. Auch dies vereinfacht die Herstellung. Zweckmäßig können bei diesem Einsatz die Anschlüsse für Einlass und Auslass als Rohre ausgestaltet sein, die an einen C-förmigen Kanalkörper angebracht sind. Dabei kann ferner vorgesehen sein, dass diese Rohre parallel zueinander verlaufen und jeweils tangential in den Kanalkörper übergehen. Hierdurch besitzt der Kühlkanal einen sehr geringen Durchströmungswiderstand.

Bei einer vorteilhaften Ausführungsform kann vorgesehen sein, dass mehrere primäre Befestigungsstellen zum Befestigen des Gehäuses an der Maschine vorgesehen sind. Darüber hinaus kann zumindest eine sekundäre Befestigungsstelle zum Befestigen des ersten Gehäuseteils am zweiten Gehäuseteil vorgesehen sein. Besonders vorteilhaft ist dann eine Weiterbildung, bei der die primären Befestigungsstellen so ausgestaltet sind, dass sie zusätzlich zur wenigstens einen Befestigungsstelle das erste Gehäuseteil am zweiten Gehäuseteil befestigen, wenn mit Hilfe der primären Befestigungsstellen das Gehäuse an der Maschine befestigt ist. Hierdurch vereinfacht sich die Handhabung der Stellvorrichtung insbesondere im Hinblick auf eine Funktionsüberprüfung. Mit anderen Worten, solange die Stellvorrichtung nicht mit ihren primären Befestigungsstellen an der Maschine befestigt ist, sind das erste Gehäuseteil und das zweite Gehäuseteil über die wenigstens eine sekundäre Befestigungsstelle aneinander befestigt. Diese Fixierung der beiden Gehäuseteile aneinander mit Hilfe der wenigstens einen sekundären Befestigungsstelle ist dabei ausreichend dimensioniert für eine Funktionsprüfung der Stellvorrichtung und vereinfacht die Lagerung und den Transport der vormontierten Stellvorrichtungen vor ihrer finalen Montage an der jeweiligen Maschine. Sobald jedoch die Stellvorrichtung bzw. deren Gehäuse mit Hilfe der primären Befestigungsstellen an der jeweiligen Maschine befestigt wird, übernehmen die primären Befestigungsstellen auch die Fixierung der beiden Gehäuseteile aneinander. In diesem Zustand, in dem das Gehäuse an der Maschine mittels der primären Befestigungsstellen befestigt ist, wirken die primären Befestigungsstellen somit zusätzlich zu der wenigstens einen sekundären Befestigungsstelle, um die beiden Gehäuseteile aneinander zu fixieren. Dies bedeutet jedoch, dass die sekundären Befestigungsstellen nach dem Festlegen des Gehäuses an der Maschine nicht mehr benötigt werden und insoweit redundant sind. Die primären Befestigungsstellen sind für den ordnungsgemäßen dauerhaften Betrieb der Stellvorrichtung an der jeweiligen Maschine dimensioniert und können insbesondere thermisch bedingte Effekte und Alterungserscheinungen kompensieren. Die primären Befestigungsstellen ermöglichen somit eine deutlich höhere Belastung der Verbindung zwischen den beiden Gehäuseteilen als die wenigstens eine sekundäre Befestigungsstelle, da letztere nur für die Funktionsüberprüfung eine hinreichende Verbindung zwischen den beiden Gehäuseteilen gewährleisten muss. Diese Ausführungsform beruht somit auf dem allgemeinen Gedanken, die primären und sekundären Befestigungsstellen hinsichtlich der Befestigung der beiden Gehäuseteile aneinander redundant auszugestalten.

Dieser Vorschlag ermöglicht es insbesondere für die jeweilige sekundäre Befestigungsstelle eine preiswerte Lösung zu verwenden, da sie lediglich die Funktionsüberprüfung, nicht jedoch den Dauerbetrieb der Stellvorrichtung an der Maschine gewährleisten muss. Insbesondere kann somit auf eine Schraubverbindung zur Realisierung der jeweiligen sekundären Befestigungsstelle verzichtet werden.

Besonders vorteilhaft ist eine Ausführungsform, bei der die primären Befestigungsstellen jeweils eine erste Primärkontaktstelle und eine zweite Primärkontaktstelle aufweisen, die einander axial zugewandt sind, und bei der mehrere sekundäre Befestigungsstellen vorgesehen sind, die jeweils eine erste Sekundärkontaktstelle und eine zweite Sekundärkontaktstelle aufweisen, die einander axial zugewandt sind. Die primären und sekundären Befestigungsstellen sind nun hinsichtlich dieser Primärkontaktstellen und dieser Sekundärkontaktstellen so aufeinander abgestimmt, dass ein einem ersten Fall, in dem die beiden Gehäuseteile mittels der sekundären Befestigungsstellen aneinander befestigt sind und das Gehäuse nicht mittels der primären Befestigungsstellen an der Maschine befestigt ist, die ersten Sekundärkontaktstellen an den zugehörigen zweiten Sekundärkontaktstellen anliegen, während zwischen den ersten Primärkontaktstellen und den zugehörigen zweiten Primärkontaktstellen ein axialer Primärspalt ausgebildet ist, und dass in einem zweiten Fall, in dem die beiden Gehäuseteile mittels der sekundären Befestigungsstellen aneinander befestigt sind und das Gehäuse mittels der primären Befestigungsstellen an der Maschine befestigt ist, zwischen den ersten Sekundärkontaktstellen und den zugehörigen zweiten Sekundärkontaktstellen ein axialer Sekundärspalt ausgebildet ist, während die ersten Primärkontaktstellen an den zugehörigen zweiten Primärkontaktstellen anliegen. Hierdurch lässt sich im ersten Fall beispielsweise die jeweilige Funktionsprüfung durchführen, während der zweite Fall am Ende der endgültigen Montage vorliegt. Durch den Sekundärspalt kann eine gewisse axiale Beweglichkeit der beiden Gehäuseteile zueinander erhalten bleiben, beispielsweise um die mittels der Sekundärbefestigungsstellen hergestellte Befestigung der beiden Gehäuseteile aneinander wieder einfach lösen zu können, z.B. falls die Funktionsprüfung einen Bedarf für eine Nacharbeitung aufgezeigt hat.

Bei einer vorteilhaften Weiterbildung können die primären Befestigungsstellen jeweils als Schraubverbindung ausgestaltet sein, die jeweils eine Hülse mit einer Durchgangsöffnung zum Durchführen eines Schraubenschafts aufweisen. Die jeweilige Hülse kann axial einenends einen Montageanschlag aufweisen und axial anderenends einen Schraubanschlag aufweisen. Mit dem Montageanschlag kann sich die Hülse an einer Montagestelle der Maschine direkt oder über eine Scheibe indirekt abstützen. An dem Schraubanschlag kann sich ein Schraubenkopf einer den Schraubenschaft aufweisenden Schraube oder eine auf den Schraubenschaft aufgeschraubte Mutter indirekt über eine Scheibe oder direkt abstützen. Bevorzugt ist nun die jeweilige Hülse axial geteilt, so dass sie ein den Montageanschlag aufweisendes, am ersten Gehäuseteil ausgebildetes erstes Hülsenteil und ein den Schraubanschlag aufweisendes, am zweiten Gehäuseteils ausgebildetes zweites Hülsenteil aufweist. Die jeweilige Hülse wird somit beim Befestigen des ersten Gehäuseteils am zweiten Gehäuseteil komplettiert.

Zweckmäßig kann das erste Gehäuseteil aus Kunststoff hergestellt sein, wobei dann die ersten Hülsenteile integral am ersten Gehäuseteil ausgeformt sind. Zusätzlich oder alternativ kann das zweite Gehäuseteil aus Kunststoff hergestellt sein, wobei dann die zweiten Hülsenteile integral am zweiten Gehäuseteil ausgeformt sind.

Eine vorteilhafte Ausführungsform sieht vor, dass das erste Hülsenteil aus Kunststoff besteht und eine den Montageanschlag definierende erste Metallhülse enthält. Zusätzlich oder alternativ kann das zweite Hülsenteil durch eine den Schraubanschlag definierende zweite Metallhülse gebildet sein oder aus Kunststoff bestehen und eine den Schraubanschlag definierende zweite Metallhülse enthalten. Besonders vorteilhaft ist dabei eine Ausführungsform, bei der sich die erste Metallhülse axial an der zweiten Metallhülse, vorzugsweise direkt, abstützt. Über diese Metallhülsen kann innerhalb der jeweiligen Verschraubung eine relativ große axiale Verspannung erzeugt werden, bspw. über ein entsprechendes Anzugsmoment innerhalb der jeweiligen Schraubverbindung. Hierdurch können insbesondere thermisch bedingte Dehnungseffekte kompensiert werden.

Bei einer anderen Ausführungsform kann vorgesehen sein, dass bei der jeweiligen Hülse das eine Hülsenteil durch eine gemeinsame Metallhülse gebildet ist oder aus Kunststoff besteht und eine gemeinsame Metallhülse enthält. Diese gemeinsame Metallhülse definiert den Montageanschlag und den Schraubanschlag. Ferner erstreckt sich diese gemeinsame Metallhülse durch das andere Hülsenteil koaxial hindurch. Die Verwendung einer solchen gemeinsamen Metallhülse vereinfacht die Herstellung der Gehäuseteile. Außerdem können die an dem einen Gehäuseteil ausgebildeten gemeinsamen Metallhülsen beim Anbauen des anderen Gehäuseteils als Positionierhilfen verwendet werden.

Bei einer vorteilhaften Weiterbildung kann sich der vorstehend genannte Kragen der Blechschale bis in wenigstens eine solche primäre Befestigungsstelle hinein erstrecken. Zweckmäßig kann sich die erste Metallhülse über den Kragen an der zweiten Metallhülse abstützen. In diesem Fall stützen sich dann die erste Metallhülse und die zweite Metallhülse direkt am Kragen axial ab. Sofern die zweite Metallhülse das zweite Hülsenteil bildet, kann es auch an besagtem Kragen befestigt sein, z. Bsp. durch eine Schweißverbindung oder eine Lötverbindung.

Bei einer anderen Ausführungsform können mehrere sekundäre Befestigungsstellen vorgesehen sein, die jeweils als Rastverbindung ausgestaltet sind. Zweckmäßig weist die jeweilige Rastverbindung einen am ersten Gehäuseteil ausgebildeten, vorzugsweise radial federnden Rasthaken und eine am zweiten Gehäuseteil ausgebildete Rastkontur auf, die mit dem Rasthaken zum Befestigen des ersten Gehäuseteils am zweiten Gehäuseteil zusammenwirkt. Die jeweilige Rastkontur kann dabei als zusätzlich an einer Außenseite des zweiten Gehäuseteils vorgesehener Vorsprung ausgestaltet sein oder durch eine ohnehin an der Außenseite des zweiten Gehäuseteils vorhandene Kante gebildet sein. Eine derartige Rastverbindung lässt sich während der Herstellung besonders einfach realisieren.

Bevorzugt ist eine Weiterbildung, bei welcher der jeweilige Rasthaken am ersten Hülsenteil ausgebildet ist, während die jeweilige Rastkontur am zweiten Hülsenteil ausgebildet ist. Optional kann das erste Gehäuseteil aus Kunststoff hergestellt sein, so dass dann das erste Hülsenteil und/oder die Rasthaken integral am ersten Gehäuseteil ausgeformt sind. Zusätzlich oder alternativ kann das zweite Gehäuseteil aus Kunststoff hergestellt sein, wobei die Rastkonturen und/oder die zweiten Hülsenteile integral am zweiten Gehäuseteil ausgeformt sind. Die Rastkonturen können auch an der Blechschale ausgebildet sein.

Eine andere vorteilhafte Ausführungsform sieht vor, dass im ersten Gehäuseteil zumindest ein elektrisches und/oder elektronisches Bauteil in einem Kühlbereich angeordnet ist. Dieser Kühlbereich kann sich in einem dem zweiten Gehäuseteil zugewandten Bereich des ersten Gehäuseteils und axial fluchtend zum Kühlkanal befinden. Zusätzlich oder alternativ kann sich dieser Kühlbereich an einer vom zweiten Gehäuseteil abgewandten Innenseite einer axialen Stirnwand des ersten Gehäuseteils befinden, die an ihrer dem zweiten Gehäuseteil zugewandten Außenseite direkt mit dem zweiten Gehäuseteil in Kontakt steht. Auf diese Weise lässt sich auch das jeweilige elektrische und/oder elektronische Bauteil effizient kühlen, wodurch es eine verlängerte Lebenszeit besitzt.

Bei einer anderen Weiterbildung kann vorgesehen sein, dass der Kühlkanal innerhalb des zweiten Gehäuseteils an einer vom ersten Gehäuseteil abgewandten Seite durch einen Kanalboden axial begrenzt ist, der sich in der Umfangsrichtung entlang des gesamten Kühlkanals erstreckt. Somit ist der Kühlkanal zwischen Kühlmitteleinlass und Kühlmittelauslass nicht axial aus dem zweiten Gehäuseteil herausgeführt. Vorzugsweise kann vorgesehen sein, dass der Kühlkanal innerhalb des zweiten Gehäuseteils das Kühlmittel vom Kühlmitteleinlassanschluss in der Umfangsrichtung zum Kühlmittelauslassanschluss führt. Diese Maßnahme bewirkt insbesondere, dass der Kühlkanal zwischen Kühlmitteleinlass und Kühlmittelauslass ausschließlich innerhalb des zweiten Gehäuseteils verläuft. Zusätzlich oder alternativ kann weiter vorgesehen sein, dass der Kühlkanal an einer dem ersten Gehäuseteil zugewandten Axialseite eine sich in der Umfangsrichtung erstreckende, axial offene Kanalöffnung aufweist, die entlang ihrer gesamten Erstreckung in Umfangsrichtung durch das erste Gehäuseteil axial verschlossen ist.

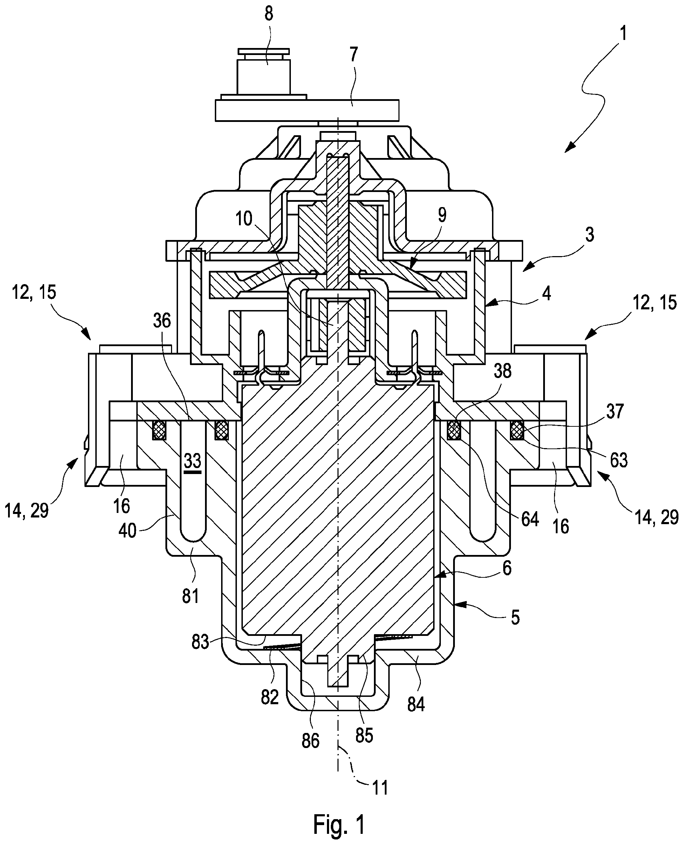

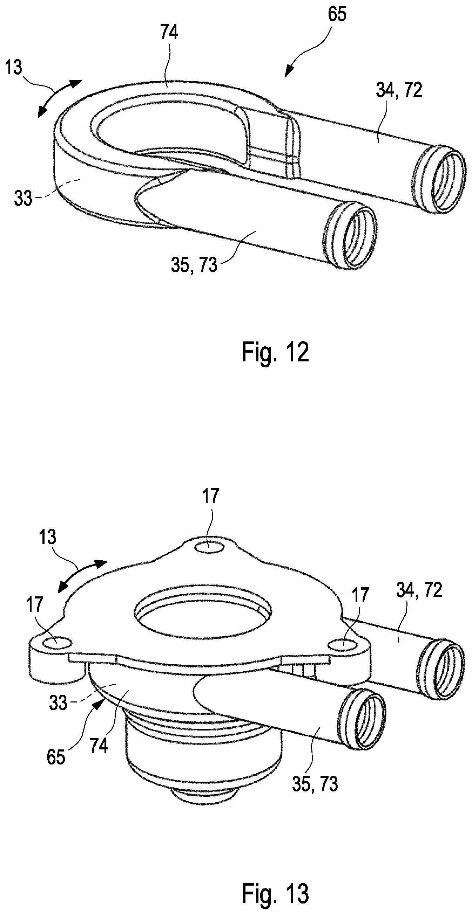

Weitere wichtige Merkmale und Vorteile der Erfindung ergeben sich aus den Unteransprüchen, aus den Zeichnungen und aus der zugehörigen Figurenbeschreibung anhand der Zeichnungen, wobei die Figuren 1 und 10 bis 14 nicht erfindungsgemäße Ausführungsformen zeigen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: einen Längsschnitt einer Stellvorrichtung,
- Fig. 2-4: je eine isometrische Ansicht der Stellvorrichtung, jedoch bei verschiedenen Ausführungsformen,
- Fig. 5: eine isometrische Detailansicht der Stellvorrichtung im Bereich einer primären und sekundären Befestigungsstelle,
- Fig. 6: ein Längsschnitt im Bereich einer derartigen Befestigungsstelle,
- Fig. 7-8: je einen Längsschnitt wie in Fig. 6, jedoch bei anderen Ausführungsformen und bei verschiedenen Zuständen a und b,
- Fig. 9.10: jeweils Längsschnitte wie in Fig. 1, jedoch bei verschiedenen anderen Ausführungsformen,
- Fig. 11: noch ein Längsschnitt der Stellvorrichtung, jedoch bei einer weiteren Ausführungsform,
- Fig. 12: eine isometrische Ansicht eines Einsatzes ohne zweites Gehäuseteil,
- Fig. 13: eine isometrische Ansicht des Einsatzes mit zweitem Gehäuseteil,
- Fig. 14: ein Längsschnitt der Stellvorrichtung bei einer weiteren Ausführungsform.

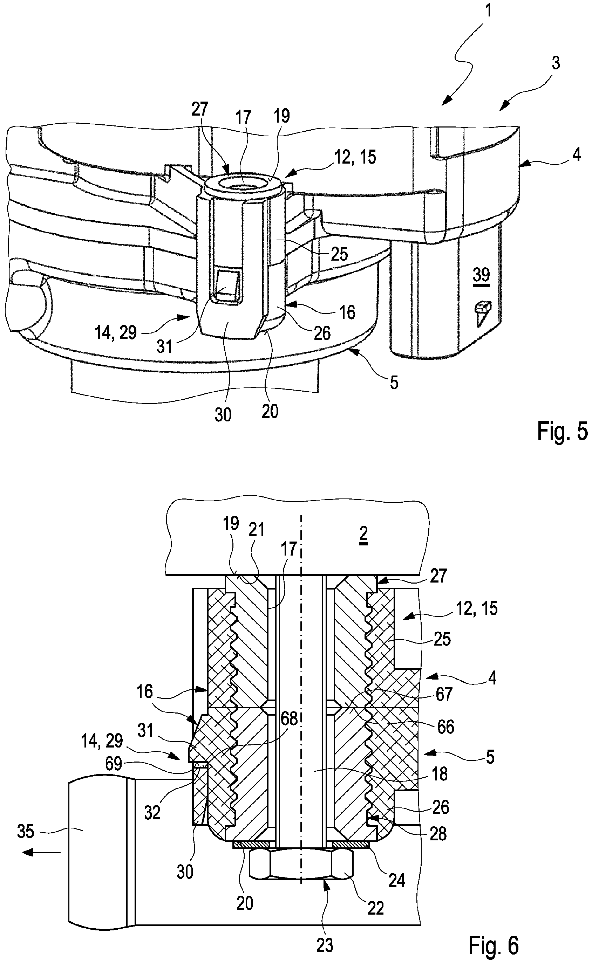

Entsprechend den Fig. 1 bis 14 umfasst eine Stellvorrichtung 1, die sich zum mechanischen Betätigen einer Komponente einer in Fig. 6 nur teilweise dargestellten Maschine 2 eignet, ein Gehäuse 3, das zweiteilig oder mehrteilig ausgestaltet ist und dementsprechend zumindest ein erstes Gehäuseteil 4 und ein zweites Gehäuseteil 5 aufweist. Ferner weist die Stellvorrichtung 1 einen im Gehäuse 3 angeordneten Elektromotor 6 auf, der zum Antreiben eines außen am Gehäuse 3 angeordneten Stellglieds 7 vorgesehen ist. Das Stellglied 7 dient seinerseits zum Koppeln mit der jeweils zu betätigenden Komponente. Beispielsweise weist das Stellglied 7 hierzu einen Zapfen 8 auf. Die Kopplung des Elektromotors 6 mit dem Stellglied 7 erfolgt im Gehäuse 3 über ein mehrstufiges Getriebe 9, das eingangsseitig mit einer Antriebswelle 10 des Elektromotors 6 und ausgangsseitig mit dem Stellglied 7 verbunden ist. Eine Rotationsachse 11 des Elektromotors 6, um welche die Antriebswelle 10 drehend angetrieben ist, definiert eine Axialrichtung, die parallel zur Rotationsachse 11 verläuft.

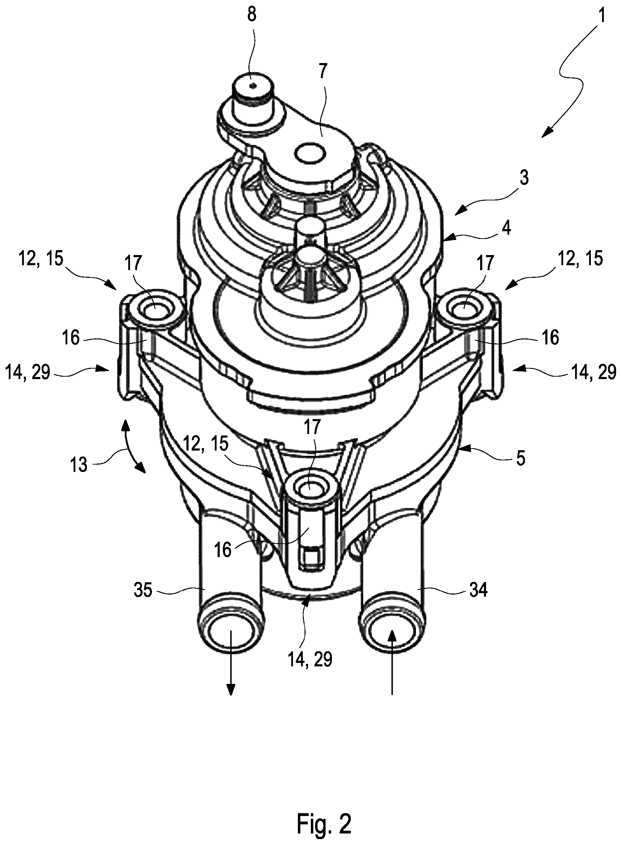

Die Stellvorrichtung 1 weist optional mehrere primäre Befestigungsstellen 12 auf, die zum Befestigen des Gehäuses 3 an der Maschine 2 dienen. Im gezeigten Beispiel sind rein exemplarisch drei derartige primäre Befestigungsstellen 12 vorgesehen, die in der Umfangsrichtung gleichmäßig verteilt angeordnet sind. Die Umfangsrichtung bezieht sich auf die Rotationsachse 11 und ist in den Fig. 2 bis 4 durch einen Doppelpfeil angedeutet und mit 13 bezeichnet. Ferner ist die Stellvorrichtung 1 optional mit wenigstens einer sekundären Befestigungsstelle 14 ausgestattet, die zum Befestigen des ersten Gehäuseteils 4 am zweiten Gehäuseteil 5 dient. Beim hier gezeigten Beispiel sind mehrere derartige sekundäre Befestigungsstellen 14 vorgesehen, nämlich rein exemplarisch genau drei, die ebenfalls in der Umfangsrichtung 13 gleichmäßig beabstandet verteilt angeordnet sind. Die primären und sekundären Befestigungsstellen 12, 14 können auch als primäre und sekundäre Befestigungsmittel 12, 14 bzw. als primäre und sekundäre Befestigungseinrichtungen 12, 14 bezeichnet werden.

Bei der hier vorgestellten Stellvorrichtung 1 sind die primären Befestigungsstellen 12 außerdem dazu vorgesehen, das erste Gehäuseteil 4 zusätzlich zu den sekundären Befestigungsstellen 14 am zweiten Gehäuseteil 5 zu befestigen, wenn mit Hilfe der primären Befestigungsstellen 12 das Gehäuse 3 an der Maschine 2 befestigt ist. Bei an der Maschine 2 befestigter Stellvorrichtung 1 sind somit die beiden Gehäuseteile 4, 5 redundant aneinander befestigt, nämlich einerseits mittels der sekundären Befestigungsstellen 14 und andererseits mittels der primären Befestigungsstellen 12.

Bei dem hier gezeigten Beispiel sind die primären Befestigungsstellen 12 jeweils als Schraubverbindung 15 ausgestaltet. Diese Schraubverbindungen 15 weisen jeweils eine Hülse 16 auf, die eine Durchgangsöffnung 17 enthält, durch die ein nur in Fig. 6 gezeigter Schraubenschaft 18 durchführbar ist. Bezug nehmend auf Fig. 6 weist die jeweilige Hülse 16 axial einenends einen Montageanschlag 19 und axial anderenends einen Schraubanschlag 20 auf. Im gezeigten montierten Zustand stützt sich der Montageanschlag 19 axial an einer Montagestelle 21 der Maschine 2 direkt ab. Im Unterschied dazu stützt sich am Schraubanschlag 20 ein Schraubenkopf 22 einer den Schraubenschaft 18 aufweisenden Schraube 23 indirekt über eine Scheibe 24 axial ab. Grundsätzlich kann auch zwischen der Montagestelle 21 und dem Montageanschlag 19 eine Scheibe für eine indirekte Abstützung angeordnet sein. Im Beispiel der Fig. 6 ist die Schraube 23 in die Maschine 2 eingeschraubt. Hierzu weist die Montagestelle 21 eine entsprechende, hier nicht gezeigte Gewindeöffnung auf. Alternativ dazu ist es ebenso möglich, den Schraubenschaft 18 in Form einer Gewindestange oder Stiftschraube zu realisieren, die von der Montagestelle 21 ausgeht, insbesondere fest an der Maschine 2 angeordnet ist. In diesem Fall wird auf diesen Schraubenschaft 18 eine entsprechende Mutter aufgeschraubt, die sich dann anstelle des Schraubenkopfs 22 über die Scheibe 24 am Schraubanschlag 20 axial abstützt.

Entsprechend den Fig. 6 bis 8 ist die zuvor genannte Hülse 16 der Schraubverbindung 15 axial geteilt, so dass sie ein erstes Hülsenteil 25 und ein zweites Hülsenteil 26 aufweist. Das erste Hülsenteil 25 ist am ersten Gehäuseteil 4 ausgebildet und weist den Montageanschlag 19 auf. Das zweite Hülsenteil 26 ist am zweiten Gehäuseteil 5 ausgebildet und weist den Schraubanschlag 20 auf. Vorzugsweise ist das erste Gehäuseteil 4 aus Kunststoff hergestellt. Die ersten Hülsenteile 25 sind dann zweckmäßig integral am ersten Gehäuseteil 4 ausgeformt. Das zweite Gehäuseteil 5 ist vorzugsweise ein Gussteil aus Kunststoff oder Metall. Bevorzugt handelt es sich um ein Metallteil, das sich durch eine erhöhte Wärmeleitung auszeichnet. Bevorzugt kommt dabei ein Leichtmetall bzw. eine Leichtmetalllegierung, vorzugsweise auf Aluminiumbasis, in Betracht.

Gemäß Fig. 6 besteht das erste Hülsenteil 25 somit vorzugsweise aus Kunststoff und enthält eine erste Metallhülse 27, die den Montageanschlag 19 definiert. Ein axiales Stirnende der ersten Metallhülse 27 bildet hierzu den Montageanschlag 19. Das erste Hülsenteil 27 ist beim Spritzformen des ersten Gehäuseteils 4 in der Spritzform angeordnet, so dass es formschlüssig in den Kunststoff des ersten Hülsenteils 25 eingebettet ist. Im Beispiel der Fig. 6 ist auch das zweite Hülsenteil 26 aus Kunststoff hergestellt und mit einer zweiten Metallhülse 28 ausgestattet, die den Schraubanschlag 20 definiert. Hierzu ist der Schraubanschlag 20 an einer axialen Stirnseite der zweiten Metallhülse 28 ausgebildet. Im montierten Zustand stützt sich die erste Metallhülse 27 axial an der zweiten Metallhülse 28 direkt ab.

Sofern wie hier die Anzahl an primären Befestigungsstellen 12 und sekundären Befestigungsstellen 14 gleich ist, wird eine Ausführungsform bevorzugt, bei der je eine sekundäre Befestigungsstelle 14 in je eine primäre Befestigungsstelle 12 integriert ist. Hierdurch ergibt sich eine signifikante Bauraumeinsparung entlang des Umfangs des Gehäuses 3.

Bei den hier gezeigten, bevorzugten Beispielen sind die sekundären Befestigungsstellen 14 jeweils als Rastverbindung 29 ausgestaltet. Die jeweilige Rastverbindung 29 weist einen am ersten Gehäuseteil 4, hier am ersten Hülsenteil 25, ausgebildeten, radial federelastischen Rasthaken 30 auf. Außerdem weist die jeweilige Rastverbindung 29 eine am zweiten Gehäuseteil 5 bzw. hier am zweiten Hülsenteil 26 ausgebildete Rastkontur 31 auf, die komplementär zum Rasthaken 30 geformt ist und die mit dem Rasthaken 30 zum Befestigen des ersten Gehäuseteils 4 am zweiten Gehäuseteil 5 zusammenwirkt. Die Rastkontur 30 ist hier in Form einer Rastnase mit Rampe ausgestaltet. Zweckmäßig ist der jeweilige Rasthaken 30 integral am ersten Hülsenteil 25 ausgeformt, während die Rastkontur 31 zweckmäßig integral am zweiten Hülsenteil 26 ausgebildet ist.

Erkennbar hintergreift der Rasthaken 30 die Rastkontur 31 axial, wodurch in axialer Richtung ein effizienter Formschluss entsteht, der eine hinreichende Fixierung der beiden Gehäuseteile 4, 5 aneinander gewährleistet, beispielsweise um eine Funktionsprüfung der Stellvorrichtung 1 durchführen zu können. Sobald jedoch, wie in Fig. 6 gezeigt, das Gehäuse 3 an der Maschine 2 befestigt ist, übernehmen die primären Befestigungsstellen 12 die Fixierfunktion zum Fixieren der beiden Gehäuseteile 4, 5 aneinander. Insbesondere kann dabei auch die Haltekraft der sekundären Befestigungsstellen 14 aufgehoben werden. In Fig. 6 ist ein Axialspalt 32 zwischen dem Rasthaken 30 und der Rastkontur 31 erkennbar, so dass in diesem montierten Zustand keine Axialkräfte zwischen Rasthaken 30 und Rastkontur 31 übertragen werden. Mit anderen Worten, die sekundäre Befestigungsstelle 14 bzw. die Rastverbindung 29 überträgt hier keine axialen Kräfte zwischen dem ersten Bauteil 4 und dem zweiten Bauteil 5 und ist insoweit deaktiviert.

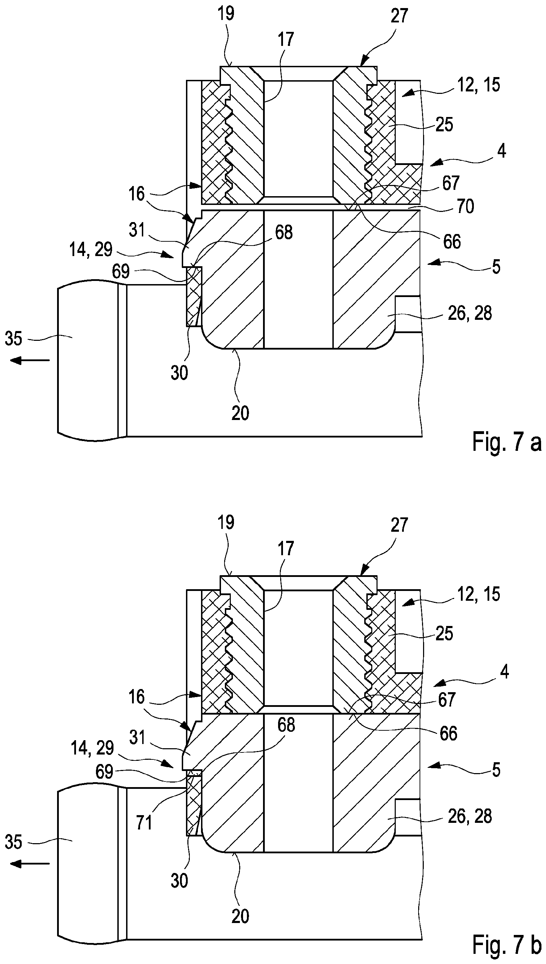

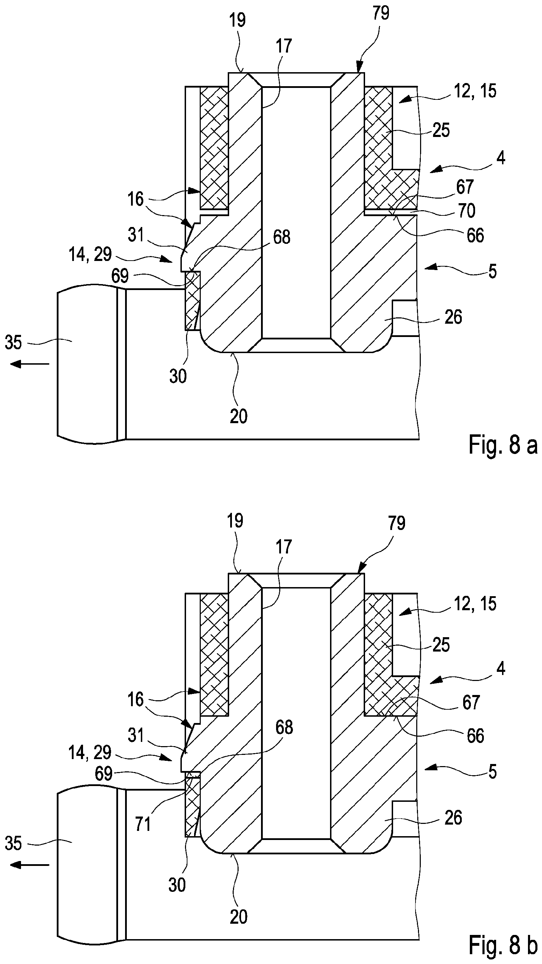

Dieses Zusammenspiel von primären Befestigungsstellen 12 und sekundären Befestigungsstellen 14 wird nachfolgend anhand der Fig. 7 und 8 näher erläutert, die sich durch die Ausgestaltung der Hülse 16 und/oder der jeweiligen Metallhülse 27, 28 sowie in der Materialauswahl für das zweite Gehäuseteil 5 voneinander unterscheiden. Darauf wird jedoch noch weiter unten eingegangen.

Gemäß den Fig. 7 und 8 weisen die primären Befestigungsstellen 12 jeweils eine erste Primärkontaktstelle 66 und eine zweite Primärkontaktstelle 67 auf, die einander axial zugewandt sind. Die erste Primärkontaktstelle 66 befindet sich an einer dem zweiten Hülsenteil 26 zugewandten axialen Stirnseite des ersten Hülsenteils 25. Die zweite Primärkontaktstelle 67 befindet sich an einer dem ersten Hülsenteil 25 zugewandten axialen Stirnseite des zweiten Hülsenteils 26. Im Beispiel der Fig. 6 befinden sich diese Primärkontaktstellen 66, 67 an den Metallhülsen 27, 28. Die sekundären Befestigungsstellen 14 weisen jeweils eine erste Sekundärkontaktstelle 68 und eine zweite Sekundärkontaktstelle 69 auf, die einander axial zugewandt sind. Die erste Sekundärkontaktstelle 68 befindet sich am Rasthaken 30, während sich die zweite Sekundärkontaktstelle 69 an der Rastkontur 31 befindet. In den Fig. 7a und 8a ist jeweils ein erster Fall oder erster Zustand dargestellt, während in den Fig. 7b und 8b jeweils ein zweiter Fall oder Zustand dargestellt ist. Im ersten Fall sind gemäß den Fig. 7a, 8a die beiden Gehäuseteile 4,5 mittels der sekundären Befestigungsstellen 14 aneinander befestigt, wobei im ersten Fall das Gehäuse 3 noch nicht mittels der primären Befestigungsstellen 12 an der Maschine 2 befestigt ist. In diesem ersten Fall liegen die ersten Sekundärkontaktstellen 68 an den zugehörigen zweiten Sekundärkontaktstellen 69 an, während zwischen den ersten Primärkontaktstellen 66 und den zugehörigen zweiten Primärkontaktstellen 66 ein axialer Primärspalt 70 ausgebildet ist. Mit anderen Worten, im ersten Fall liegen die Primärkontaktstellen 66, 67 nicht aneinander an. Im zweiten Fall sind gemäß den Fig. 7b und 8b die beiden Gehäuseteile 4, 5 wieder mittels der sekundären Befestigungsstellen 14 aneinander befestigt, wobei das Gehäuse 3 im zweiten Fall außerdem mittels der primären Befestigungsstellen 12 an der Maschine 2 befestigt ist. Wie vorstehend beschrieben, sind die beiden Gehäuseteile 4, 5 in diesem zweiten Fall zusätzlich auch durch die Primärbefestigungsstellen 12 aneinander befestigt. In diesem zweiten Fall ist zwischen den ersten Sekundärkontaktstellen 68 und den zugehörigen zweiten Sekundärkontaktstellen 69 ein axialer Sekundärspalt 71 ausgebildet, während die ersten Primärkontaktstellen 66 an den zugehörigen zweiten Primärkontaktstellen 67 anliegen. Mit anderen Worten, im zweiten Fall liegen die Sekundärkontaktstellen 68, 69 nicht aneinander an. Der in Fig. 6 gezeigte Zustand entspricht somit dem zweiten Fall der Fig. 7b und 8b. Dementsprechend entspricht der in Fig. 6 gezeigte Axialspalt 32 dem Sekundärspalt 71 der Fig. 7b und 8b.

Während bei dem in Fig. 6 gezeigten Beispiel das zweite Gehäuseteil 5 aus Kunststoff hergestellt ist und das daran integral ausgebildete zweite Hülsenteil 26 eine darin eingesetzte zweite Metallhülse 28 aufweist, ist bei dem in Fig. 7 gezeigten Beispiel das zweite Gehäuseteil 5 aus Metall hergestellt. Die zweite Metallhülse 28 ist dabei durch das integral am zweiten Gehäuseteil 5 ausgeformte zweite Hülsenteil 26 gebildet.

Fig. 8 zeigt nun eine weitere Ausführungsform, bei der das zweite Hülsenteil 26, das integral am zweiten Gehäuseteil 5 ausgeformt ist, durch eine gemeinsame Metallhülse 79 gebildet ist. Im Beispiel der Fig. 8 ist das zweite Gehäuseteil 5 aus Metall hergestellt, so dass zweckmäßig diese gemeinsame Metallhülse 79 integral am zweiten Gehäuseteil 5 ausgeformt ist. Bei einer anderen Ausführungsform kann dagegen vorgesehen sein, diese gemeinsame Metallhülse 79 als separates Bauteil vorzusehen, insbesondere dann, wenn das zweite Gehäuseteil 5 aus Kunststoff hergestellt ist. Dann kann auch die gemeinsame Metallhülse 79 als Einleger ausgestaltet und in das jeweilige Hülsenteil 25 oder 26 eingebunden sein. Diese gemeinsame Metallhülse 79 weist axial einerseits den Montageanschlag 19 und axial andererseits den Schraubanschlag 20 auf. Ferner erstreckt sich diese gemeinsame Metallhülse 79 ausgehend vom zweiten Hülsenteil 26 durch das erste Hülsenteil 25 koaxial hindurch. Bei separater Bauweise der gemeinsamen Metallhülse 79 erstreckt sich diese durch beide Hülsenteile 25, 26 hindurch.

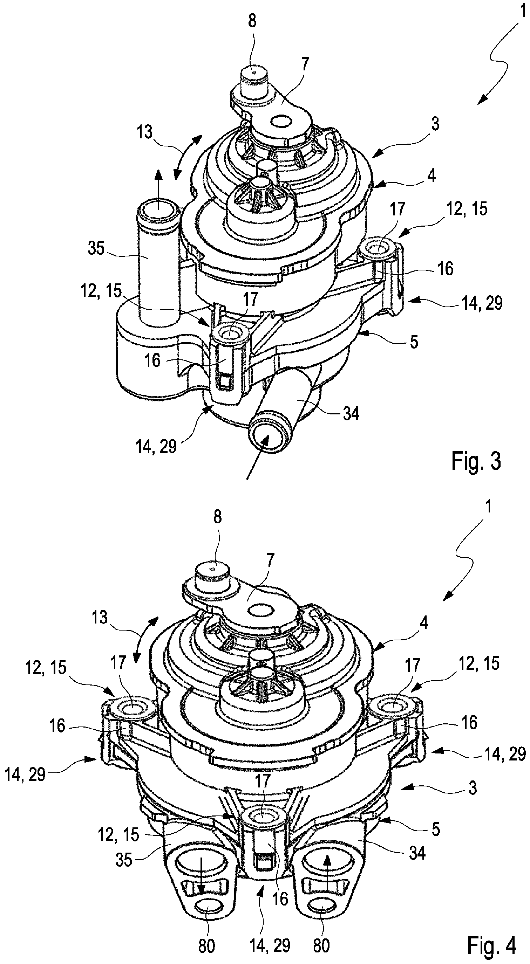

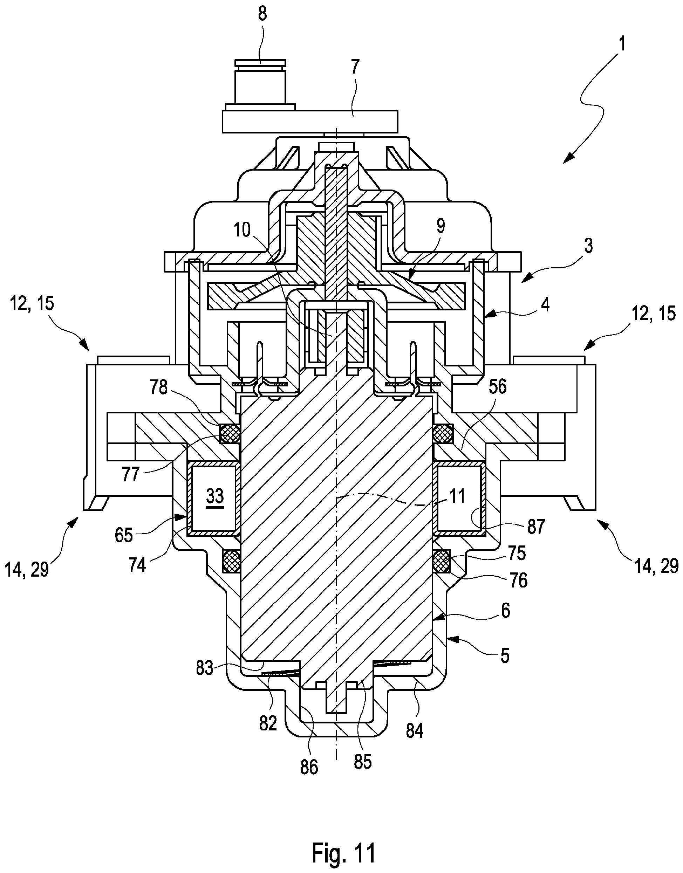

Zurückkommend auf das die in den Fig. 1 bis 4 und 9 bis 14 gezeigten Beispiele kann im Gehäuse 3 ein Kühlkanal 33 ausgebildet sein, der von einem flüssigen Kühlmittel durchströmbar ist. Ferner finden sich am Gehäuse 3 gemäß den Fig. 2 bis 4 und 9, 10, 12 und 13 ein Kühlmitteleinlassanschluss 34, der mit dem Kühlkanal 33 fluidisch verbunden ist, sowie ein Kühlmittelauslassanschluss 35, der ebenfalls mit dem Kühlkanal 33 fluidisch verbunden ist. Vorzugsweise ist der Kühlkanal 33 am bzw. im zweiten Gehäuseteil 5 vorgesehen. In den Beispielen der Fig. 1, 2 4 und 9 bis 14 sind außerdem die beiden Anschlüsse 34, 35 am zweiten Gehäuseteil 5 vorgesehen. Im Unterschied dazu zeigt Fig. 3 eine Variante, bei welcher der eine Anschluss, hier der Kühlmitteleinlassanschluss 34 am zweiten Gehäuseteil 5 ausgebildet ist, während der andere Anschluss, hier der Kühlmittelauslassanschluss 35 am ersten Gehäuseteil 4 ausgebildet ist. Insbesondere ist der Kühlkanal 33 dabei in das zweite Gehäuseteil 5 formintegriert. Ferner sind - abgesehen von der in den Fig. 11 bis 13 gezeigten Ausführungsform - die beiden Anschlüsse 34, 35 integral am zweiten Gehäuseteil 5 ausgeformt. Sofern ein derartiger Kühlkanal 33 integral vorgesehen ist, handelt es sich beim zweiten Gehäuseteil 5 bevorzugt um ein Metallteil, um die anfallende Wärme rascher auf das Kühlmittel übertragen und vom Gehäuse 3 abführen zu können.

In den Fig. 11 bis 13 ist dagegen eine andere Ausführungsform gezeigt, bei der die Anschlüsse 34, 35 sowie der Kühlkanal 33 in einem separaten Bauteil, nämlich in bzw. an einem Einsatz 65 ausgebildet sind, der in das zweite Gehäuseteil 5 eingesetzt ist. Dieser Einsatz 65 kann aus Metall hergestellt sein, während das zweite Gehäuseteil 5 dann bevorzugt aus Kunststoff hergestellt ist. Auf diese fünfte Ausführungsform wird weiter unten noch näher eingegangen.

In den Beispielen der Fig. 2 und 3 sind die besagten Anschlüsse 34, 35 als Anschlussstutzen ausgestaltet, während Fig. 4 ein Beispiel zeigt, bei dem die Anschlüsse 34, 35 jeweils als Anschlussflansch ausgestaltet sind. Dem jeweiligen Anschlussflansch ist zur Befestigung an einem dazu komplementären Flansch jeweils eine Schrauböffnung 80 zugeordnet, durch die eine entsprechende Schraube durchführbar ist.

Wie sich z.B. Fig. 1 entnehmen lässt, ist der Kühlkanal 33 im zweiten Gehäuseteil 5 an einer dem ersten Gehäuseteil 4 zugewandten Seite axial offen. Diese axiale Kanalöffnung ist in Fig. 1 mit 36 bezeichnet. Diese axiale Kanalöffnung 36 erstreckt sich in der Umfangsrichtung 13, zweckmäßig entlang des gesamten Kühlkanals 33. Ferner ist die Kanalöffnung 36 entlang ihrer gesamten Erstreckung in Umfangsrichtung 13 durch das erste Gehäuseteil 4 axial verschlossen. Der Kühlkanal 33 umschließt den Elektromotor 6 in der Umfangsrichtung 13 über mehr als 180°, so dass der Kühlkanal 33 in einem Axialschnitt C-förmig ist. Die Endbereiche des Kühlkanals 33 kommunizieren mit je einem der Anschlüsse 34, 35. In der Umfangrichtung 13 zwischen den Anschlüssen 34, 35 ist der Kühlkanal 33 unterbrochen.

Gemäß Fig. 1 sind außerdem eine separate Außendichtung 37 und eine separate Innendichtung 38 vorgesehen. Die Außendichtung 37 läuft in der Umfangsrichtung 13 geschlossen um und ist an einer vom Elektromotor 6 radial abgewandten Seite des Kühlkanals 33 zwischen dem ersten Gehäuseteil 4 und dem zweiten Gehäuseteil 5 angeordnet. Die Innendichtung 38 läuft ebenfalls in der Umfangsrichtung 13 geschlossen um und ist an einer dem Elektromotor 6 radial zugewandten Seite des Kühlkanals 33 zwischen dem ersten Gehäuseteil 4 und dem zweiten Gehäuseteil 5 angeordnet. Diese als separate Bauteile realisierten Dichtungen 37, 38 sind hier in ringförmig umlaufende Nuten 63, 64 eingesetzt, die im zweiten Gehäuseteil 5 ausgebildet sind. Im Einzelnen ist die Außendichtung 37 in eine radial weiter außen liegende Außennut 63 eingesetzt, während die Innendichtung 38 in eine radial weiter innen liegende Innennut 64 eingesetzt ist. Außendichtung 37 und Innendichtung 38 können bei einer anderen, hier nicht gezeigten Ausführungsform auch Abschnitte einer gemeinsamen Dichtung sein, die zweckmäßig einen stegartigen Verbindungsabschnitt aufweist, der die beiden Dichtungsabschnitte 37, 38 miteinander verbindet und der sich im eingebauten Zustand über die offene Seite 36 des Kühlkanals 33 erstreckt und diesen axial abdeckt.

Ferner lässt sich den hier gezeigten Ausführungsformen außerdem entnehmen, dass der Kühlkanal 33 innerhalb des zweiten Gehäuseteils 5 an einer vom ersten Gehäuseteil 4 abgewandten Seite durch einen Kanalboden 81 axial begrenzt ist. Des Weiteren ist hier vorgesehen, dass der Kühlkanal 33 innerhalb des zweiten Gehäuseteils 5 vom Kühlmitteleinlassanschluss 34 in der Umfangsrichtung 13 zum Kühlmittelauslassanschluss 35 führt.

Gemäß Fig. 1 und 9 bis 11 kann im zweiten Gehäuseteil 5 außerdem eine Vorspannfeder 82 angeordnet sein, z.B. in Form einer Wellfeder, die den Elektromotor 6 in Richtung zum ersten Gehäuseteil 4 antreibt bzw. vorspannt. Hierzu stützt sich die Vorspannfeder 82 einerseits an einer vom ersten Gehäuseteil 4 abgewandten Rückseite 83 des Elektromotors 6 und andererseits an einem vom ersten Gehäuseteil 4 abgewandten Gehäuseboden 84 des zweiten Gehäuseteils 5 ab. Die Vorspannfeder 82 kann ringförmig ausgestaltet sein und zweckmäßig einen axialen Vorsprung 85 des Elektromotors 6 umgreifen, der an dessen Rückseite 83 axial vorsteht. Im Beispiel kann der Vorsprung 85 in eine im Gehäuseboden 84 ausgesparte Vertiefung 86 eingreifen, in der er axial verstellbar geführt ist.

In Fig. 5 ist ein elektrischer Anschluss 39 erkennbar, über den der Elektromotor 6 mit elektrischer Energie versorgt werden kann und über den der Elektromotor 6 angesteuert werden kann. Sofern im Gehäuse 3, außerdem eine Sensorik oder dergleichen angeordnet ist, beispielsweise um die aktuelle Drehlage des Stellglieds 7 zu detektieren, kann über den Elektroanschluss 39 auch eine entsprechende Datenleitung geführt sein.

Die Fig. 1 und 9 bis 14 zeigen insgesamt fünf verschiedene Ausführungsformen zur Realisierung des Kühlkanals 33 im zweiten Gehäuseteil 5, wobei das zweite Gehäuseteil 5 aus Kunststoff oder aus Metall hergestellt ist. Zweckmäßig ist bei den vier Ausführungsformen der Fig. 1, 9, 10 und 14 vorgesehen, dass der Kühlmitteleinlassanschluss 34 und der Kühlmittelauslassanschluss 35 integral am zweiten Gehäuseteil 5 ausgeformt sind. Mit anderen Worten, beim Gießen oder Spritzformen des zweiten Gehäuseteils 5 werden gleichzeitig auch die genannten Anschlüsse 34, 35 in derselben Spritzform als integrale Bestandteile des zweiten Gehäuseteils 5 erzeugt. Eine separate Fixierung dieser Anschlüsse 34, 35 am zweiten Gehäuseteil 5 entfällt somit. Alternativ können die Anschlüsse 34, 35 auch separate Bauteile sein, die an das zweite Gehäuseteil 5 angebaut sind.

Ferner ist bei diesen vier Ausführungsformen der Kühlkanal 33 jeweils zumindest teilweise in das zweite Gehäuseteil 5 integriert. Ebenso ist hier eine Abstimmung des Elektromotors 6 auf das erste Gehäuseteil 4 und das zweite Gehäuseteil 5 realisiert, die dazu führt, dass der Elektromotor 6 weitgehend im zweiten Gehäuseteil 5 angeordnet ist und lediglich im Bereich seiner Antriebswelle 10 axial in das erste Gehäuseteil 4 hineinragt.

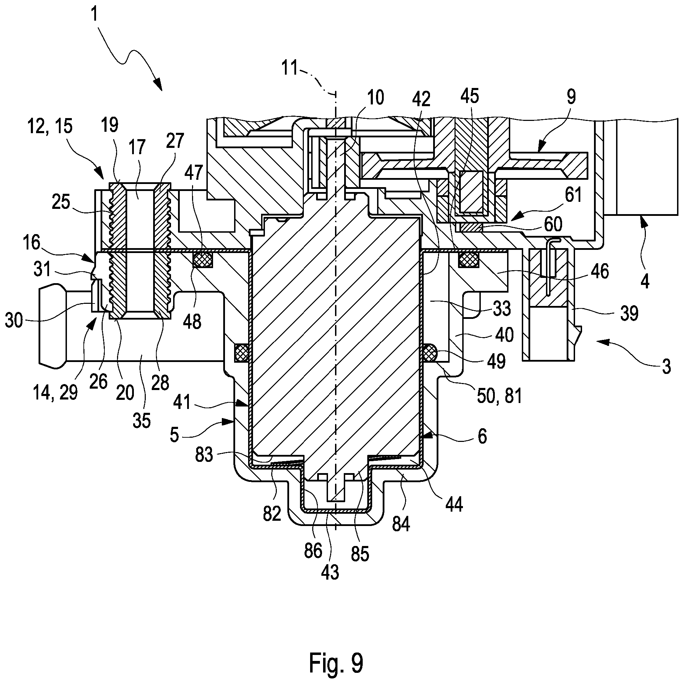

Während bei der in Fig. 1 gezeigten ersten Ausführungsform das zweite Gehäuseteil 5 bevorzugt aus Metall hergestellt ist und insbesondere durch ein Gussteil gebildet ist, zeigen die Fig. 9, 10 und 14 drei verschiedene Ausführungsformen, bei denen das zweite Gehäuseteil 5 aus Kunststoff hergestellt ist, vorzugsweise als Spritzformteil. Allen vier Ausführungsformen ist gemeinsam, dass der Kühlkanal 33 radial außen direkt durch eine den Elektromotor 6 in Umfangsrichtung 13 umschließende Umfangswand 40 begrenzt ist.

Bei der in Fig. 9 gezeigten zweiten Ausführungsform ist außerdem eine Blechschale 41 vorgesehen, die in das zweite Gehäuseteil 5 axial eingesetzt ist. Der Elektromotor 6 ist in diese Blechschale 41 axial eingesetzt. Der Kühlkanal 33 ist nun radial zwischen dieser Blechschale 41 und dem zweiten Gehäuseteil 5 ausgebildet. Ferner ist der Kühlkanal 33 hier radial innen direkt durch einen Mantel 42 der Blechschale 41 begrenzt, der den Elektromotor 6 in der Umfangsrichtung 13 umschließt. Besonders vorteilhaft ist dabei eine Ausführungsform, bei welcher der Mantel 42 der Blechschale 41 den Elektromotor 6 radial berührt, damit also radial in Kontakt steht bzw. unmittelbar daran anliegt. Somit kann Wärme vom Elektromotor 6 direkt in den Mantel 42 der Blechschale 41 eingeleitet werden. Die Blechschale 41 leitet die Wärme ihrerseits direkt über den Mantel 42 in das Kühlmittel des Kühlkanals 33 ab.

Im hier gezeigten, bevorzugten Beispiel ist die Blechschale 41 topfförmig ausgestaltet, so dass sie den in der Umfangsrichtung 13 geschlossen umlaufenden Mantel 42 und an einer vom ersten Gehäuseteil 4 abgewandten Seite einen Boden 43 aufweist, der die Blechschale 41 an dieser Axialseite axial verschließt. Gleichzeitig bildet die Blechschale 41 in ihrem Inneren einen Aufnahmeraum 44 zur Aufnahme des Elektromotors 6. Dieser ist hierzu axial in den Aufnahmeraum 44 eingesteckt. Ferner ist dieser Aufnahmeraum 44 nur an einer dem ersten Gehäuseteil 4 zugewandten Seite offen. Boden 43 und Mantel 42 sind vollständig geschlossen bzw. kontinuierlich bzw. unperforiert ausgeführt, so dass die Blechschale 41 flüssigkeitsdicht ist.

Die Blechschale 41 weist außerdem einen Kragen 45 auf, der an einem dem ersten Gehäuseteil 4 zugewandten axialen Ende des Mantels 42 angeordnet ist, radial vom Mantel 42 nach außen absteht und in der Umfangsrichtung 13 geschlossen umläuft. Der Kühlkanal 33 ist axial an der dem ersten Gehäuseteil 4 zugewandten Seite durch den Kragen 45 direkt begrenzt.

Bei den Ausführungsformen der Fig. 9, 10 und 14 weist das zweite Gehäuseteil 5 an einer dem ersten Gehäuseteil 4 zugewandten Seite einen umlaufenden Flansch 46 auf. Im Beispiel der Fig. 9 erstreckt sich der vorstehend genannte Kragen 45 der Blechschale 41 radial bis in den Bereich des Flansches 46 hinein, so dass der Kragen 45 axial an diesem Flansch 46 zur Anlage kommt. Axial zwischen dem Kragen 45 und dem Flansch 46 kann eine vollständig umlaufende Außendichtung 47 vorgesehen sein. Diese ist hier als separates Bauteil realisiert und in eine Aufnahmenut 48 eingesetzt, die hier am zweiten Gehäuseteil 5 ausgebildet ist. Zusätzlich ist im Beispiel der Fig. 9 an einer vom ersten Gehäuseteil 4 axial abgewandten Seite des Kühlkanals 33 eine vollständig umlaufende Innendichtung 49 vorgesehen, die den Mantel 42 der Blechschale 41 gegenüber dem zweiten Gehäuseteil 5 dichtet. Hierzu liegt diese Innendichtung 49 radial am Mantel 42 und axial an einer Stufe 50 des zweiten Gehäuseteils 5 an. Es ist klar, dass bei einer anderen Ausführungsform auch eine andere Positionierung dieser Innendichtung 49 vorgesehen sein kann.

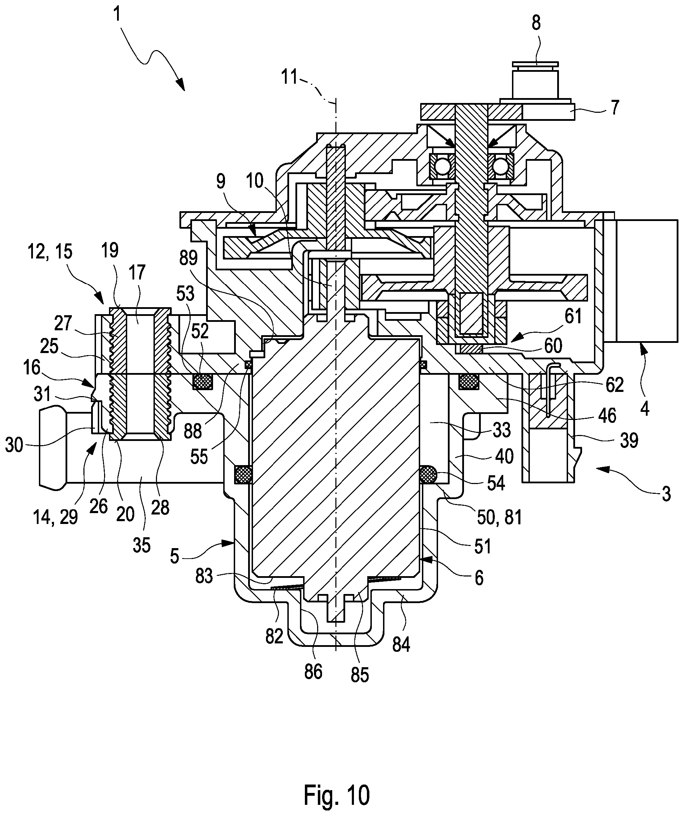

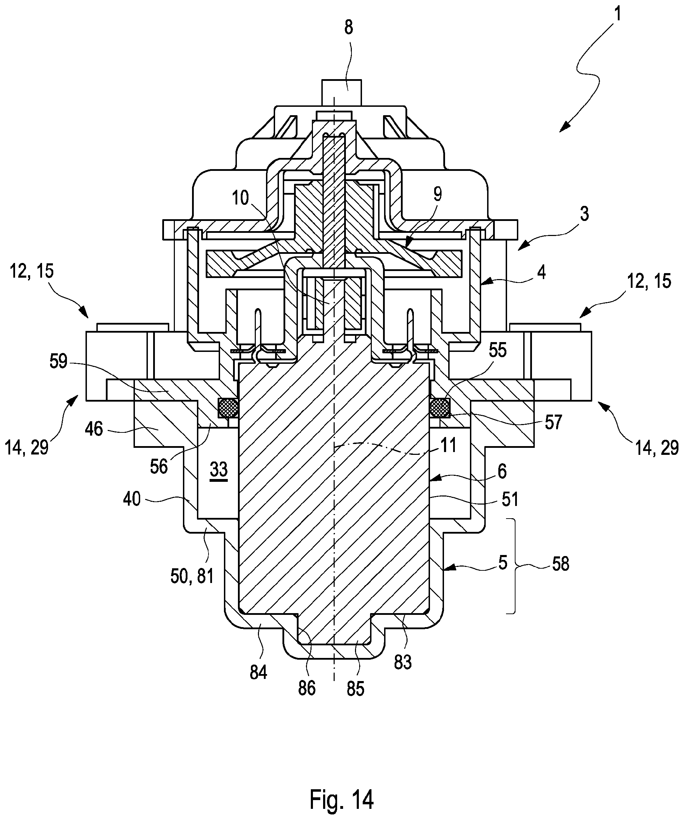

Bei den Ausführungsformen der Fig. 9, 10 und 14 ist der Kühlkanal 33 axial an der vom ersten Gehäuseteil 4 abgewandten Seite durch die vorstehend genannte Ringstufe 50 direkt begrenzt. Somit ist der Kühlkanal 33, der in den Fig. 9, 10 und 14 jeweils ein im Wesentlichen rechteckiges Querschnittsprofil besitzt, an zwei von vier Seiten direkt durch Abschnitte des zweiten Gehäuseteils 5 begrenzt, nämlich durch die Umfangswand 40 und durch die Ringstufe 50. Im Beispiel der Fig. 9 sind die beiden anderen Seiten des Kanalquerschnitts durch Bereiche der Blechschale 41 direkt begrenzt, nämlich durch den Mantel 42 und den Kragen 45. Bei den Ausführungsformen der Fig. 10 und 14 ist der Elektromotor 6 mit einem flüssigkeitsdichten und in der Umfangsrichtung 13 geschlossen umlaufenden Mantel 51 ausgestattet. Zweckmäßig ist der gesamte Elektromotor 6 flüssigkeitsdicht konfiguriert, so dass er problemlos mit dem Kühlmittel direkt in Kontakt kommen kann. Da ein derartiger flüssigkeitsdichter Elektromotor 6 teurer ist als ein konventioneller, nicht speziell abgedichteter Elektromotor 6 wird in den Ausführungsformen der Fig. 1, 9 und 11 bis 13 die Verwendung eines solchen preiswerteren Elektromotors 6 bevorzugt. Ferner muss der Elektromotor 6, der mit dem Kühlmittel in Kontakt kommt, auch gegenüber diesem Kühlmittel korrosionsbeständig ausgestaltet sein. Ein eher unkonventioneller Mantel 51 aus Kunststoff reduziert extrem die Wärmeübertragung. Ein Mantel 51 aus Metall ist dagegen vergleichsweise teuer, wenn er dicht und korrosionsbeständig ausgestaltet sein soll und z.B. aus Edelstahl besteht.

Bei den Ausführungsformen der Fig. 10 und 14 ist jedenfalls vorgesehen, dass der Elektromotor 6 direkt mit dem Kühlmittel des Kühlkanals 33 in Kontakt kommen kann, nämlich zumindest im Bereich des Mantels 51. Demnach ist hier der Kühlkanal 33 radial innen direkt durch den Mantel 51 des Elektromotors 6 begrenzt.

Wie auch bei der in Fig. 1 gezeigten Ausführungsform ist bei den Ausführungsformen der Fig. 9, 10 und 14 der Kühlkanal 33 soweit er innerhalb des zweiten Gehäuseteils 5 ausgebildet ist, an der dem ersten Gehäuseteil 4 zugewandten Seite axial offen. Während diese axial offene Seite bei der in Fig. 9 gezeigten Ausführungsform durch den Kragen 45 der Blechschale 41 verschlossen ist, erfolgt der axiale Verschluss der offenen Seite des Kühlkanals 33 bei den Ausführungsformen der Fig. 1, 10 und 14 durch das erste Gehäuseteil 4. Demnach ist bei diesen Ausführungsformen der Kühlkanal 33 axial an der dem ersten Gehäuseteil 4 zugewandten Seite durch das erste Gehäuseteil 4 begrenzt.

Bei der in Fig. 10 gezeigten dritten Ausführungsform ist an einer vom Elektromotor 6 radial abgewandten Seite des Kühlkanals 33 eine in der Umfangsrichtung 13 vollständig umlaufende Außendichtung 52 vorgesehen, die zwischen dem ersten Gehäuseteil 4 und dem zweiten Gehäuseteil 5 angeordnet ist. Auch hier ist die Außendichtung 52 als separates Bauteil vorgesehen und in eine Ringnut 53 eingesetzt, die hier am zweiten Gehäuseteil 5 ausgebildet ist. Ferner ist in Fig. 10 eine in der Umfangsrichtung 13 geschlossen umlaufende Innendichtung 54 vorgesehen, die sich an einer vom ersten Gehäuseteil 4 axial abgewandten Seite des Kühlkanals 33 befindet und dort den Mantel 51 des Elektromotors 6 gegenüber dem zweiten Gehäuseteil 5 dichtet. Hierzu liegt die Innendichtung 54 im Beispiel radial an dem Mantel 51 des Elektromotors 6 und axial an der Ringstufe 50 des zweiten Gehäuseteils 5 an. Auch hier ist klar, dass die Innendichtung 54 auch an anderer Stelle positioniert sein kann, bspw. axial beabstandet zur Ringstufe 50 in einem vom Kühlkanal 33 abgewandten Bereich des zweiten Gehäuseteils 5.

Bei der dritten Ausführungsform gemäß Fig. 10 und bei der in Fig. 14 gezeigten vierten Ausführungsform ist jeweils eine Ringdichtung 55 vorgesehen, die in der Umfangsrichtung 13 vollständig umlaufend ausgestaltet ist und dabei an einer dem ersten Gehäuseteil 4 axial zugewandten Seite des Kühlkanals 33 angeordnet und dort radial zwischen dem Mantel 51 des Elektromotors 6 und dem ersten Gehäuseteil 4 angeordnet ist. Im Beispiel der Fig. 10 befindet sich diese Ringdichtung 55 an einem Öffnungsrand 88 des ersten Gehäuseteil 4, der eine im ersten Gehäuseteil 4 ausgesparte Aufnahmeöffnung 89 in der Umfangsrichtung 13 einfasst, in die der Elektromotor 6 axial hineinragt. Im Beispiel der Fig. 14 ist am ersten Gehäuseteil 4 ein in der Umfangsrichtung 13 geschlossen umlaufender Ringsteg 56 ausgebildet, der axial in das zweite Gehäuseteil 5 vorsteht und der den Kühlkanal 33 axial begrenzt. An diesem Ringsteg 56 ist die genannte Ringdichtung 55 radial abgestützt. Außerdem enthält der Ringsteg 56 an seiner dem Elektromotor 6 zugewandten Innenseite eine Ringnut 57, in welche die Ringdichtung 55 eingesetzt ist. Der Ringsteg 56 ist radial außen unmittelbar am zweiten Gehäuseteil 5 abgestützt.

Bei der in Fig. 14 gezeigten Ausführungsform ist das zweite Gehäuseteil 5 an einem Axialabschnitt 58 des Mantels 51 angespritzt, so dass sich eine flüssigkeitsdichte Verbindung zwischen dem zweiten Gehäuseteil 5 und dem Axialabschnitt 58 des Mantels 51 ausbildet. Wie vorstehend erläutert ist bei dieser Ausführungsform das zweite Gehäuseteil 5 bevorzugt aus Kunststoff hergestellt, nämlich durch Spritzformen. Durch Einlegen des Elektromotors 6 in das hierzu verwendete Spritzwerkzeug, lässt sich das zweite Gehäuseteil 5 unmittelbar am Elektromotor 6 herstellen. Im Beispiel der Fig. 14 ist der gesamte an der vom ersten Gehäuseteil 4 abgewandten Seite an dem Kühlkanal 33 anschließende Bereich des Elektromotors 6 in den Kunststoff des zweiten Gehäuseteils 5 eingebettet bzw. vom Kunststoff des zweiten Gehäuseteils 5 umspritzt. Dementsprechend kann bei der in Fig. 14 gezeigten Ausführungsform im Bereich dieses Axialabschnitts 58 auf eine weitere Dichtung verzichtet werden. Ohnehin ist hier bevorzugt, den Mantel 51 des Elektromotors 6 flüssigkeitsdicht auszugestalten, um das zweite Gehäuseteil 5 leichter anspritzen zu können.

Im Beispiel der Fig. 14 ist außerdem zwischen dem ersten Gehäuseteil 4 und dem zweiten Gehäuseteil 5 keine zusätzliche Dichtung vorgesehen. Dies ist grundsätzlich bei allen Ausführungsformen möglich, bei denen beide Gehäuseteile 4, 5 aus Kunststoff bestehen. Beispielsweise kann eine entsprechend flüssigkeitsdichte Verbindungstechnik zum Einsatz kommen. Denkbar ist bspw. eine Schweißverbindung oder eine Klebverbindung. Eine solche Klebverbindung oder Lötverbindung kann bspw. radial zwischen dem Flansch 46 und dem Ringsteg 56 vorgesehen sein und/oder axial zwischen dem Flansch 46 und einer Ringscheibe 59 des ersten Gehäuseteils 4 vorgesehen sein, die an besagtem Flansch 46 anliegt. Alternativ dazu kann z. Bsp. an den genannten Stellen eine entsprechende Dichtung vorgesehen sein, z.B. als separates Bauteil oder als angespritzte oder angeschäumte Dichtung.

Beispielsweise kann auch bei der in Fig. 14 gezeigten, vierten Ausführungsform eine Außendichtung 52 vorgesehen sein wie sie bei der in Fig. 10 gezeigten, dritten Ausführungsform vorgesehen ist.

In den Fig. 9 und 10 ist stellvertretend für alle hier vorgestellten Ausführungsformen außerdem ein elektronisches Bauteil 60 gezeigt, bei dem es sich bspw. um einen Sensor, vorzugsweise um einen Positionssensor handelt, mit dem bspw. die aktuelle Position oder Drehlage des Stellglieds 7 bestimmt werden kann. Zweckmäßig ist nun dieses Bauteil 60 in einem Kühlbereich 61 des ersten Gehäuseteils 4 angeordnet. Dieser Kühlbereich 61 ist im Beispiel der Fig. 10 an einer vom zweiten Gehäuseteil 5 abgewandten Innenseite einer axialen Stirnwand 62 des ersten Gehäuseteils 4 ausgebildet. Eine dem zweiten Gehäuseteil 5 zugewandte Außenseite dieser Stirnwand 62 ist im zusammengebauten Zustand des Gehäuses 3 entweder direkt am zweiten Gehäuseteil 5 abgestützt, wie z.B. in Fig. 14 dargestellt, und/oder indirekt über die Außendichtung 52, wie z.B. in Fig. 10 dargestellt.

Bei der in den Fig. 11 bis 13 gezeigten fünften Ausführungsform ist vorstehend genannter Einsatz 65 vorgesehen, der den Kühlmitteleinlassanschluss 34, den Kühlmittelauslassanschluss 35 und den Kühlkanal 33 umfasst. Hierbei sind die Anschlüsse 34, 35 für Einlass und Auslass des Kühlmittels durch Rohre bzw. Rohrstücke 72 und 73 gebildet, während der Kühlkanal 33 in einem C-förmigen Kanalkörper 74 ausgebildet ist, der die beiden Rohrkörper 72, 73 miteinander verbindet. Der Kanalkörper 74 liegt radial innen an der Außenseite des Elektromotors 6 unmittelbar an. Im bevorzugten Beispiel bildet der Kanalkörper 74 eine 180°-Umlenkung bzw. einen 180°-Bogen, der an seinen Enden gerade in die geradlinigen Rohrkörper 72, 73 übergeht. Der Kanalkörper 74 ist vorzugsweise kreisbogenförmig gekrümmt. Die Rohrkörper 72, 73 erstrecken sich somit parallel zueinander und ihr Abstand voneinander entspricht im Wesentlichen dem Innendurchmesser des Kanalkörpers 74. Der Einsatz 65 kann grundsätzlich wie im Beispiel der Fig. 14 in das zweite Gehäuseteil 5 axial oder radial eingesetzt sein. Bevorzugt ist jedoch bei diesem Beispiel, das auch bei der Ausführungsform der Fig. 14 realisierbar ist, dass das zweite Gehäuseteil 5 an diesen Einsatz 65 angespritzt ist. Im Beispiel der Fig. 11 ist die Formgebung des zweiten Gehäuseteils 5 so, dass der Einsatz 65 axial darin einsetzbar ist. Er ist in diesem Beispiel mittels eines Ringstegs 56 axial positioniert, der am ersten Gehäuseteil 4 ausgeformt ist und in eine Aussparung 87 axial eingreift, die im zweiten Gehäuseteil 5 ausgebildet ist und in die der Einsatz 65 axial eingesetzt ist.

Gemäß Fig. 11 kann an einer vom ersten Gehäuseteil 4 abgewandten Seite des Einsatzes 65 eine am Elektromotor 6 radial anliegende erste Dichtung 75 in einer ersten Ringnut 76 des zweiten Gehäuseteils 5 das zweite Gehäuseteil 5 gegenüber dem Elektromotor 6 abdichten. Diese erste Dichtung 75 entspricht der der Dichtung 49 in Fig. 9 und der Dichtung 54 in Fig. 10. Außerdem ist hier eine zweite Dichtung 77 vorgesehen, die an einer dem ersten Gehäuseteil 4 zugewandten Seite des Einsatzes 65 am Elektromotor 6 radial anliegt und dabei den Elektromotor 6 gegenüber dem ersten Gehäuse 4 abdichtet. Diese zweite Dichtung 77 entspricht der Dichtung 55 aus Fig. 14. Die zweite Dichtung 77 ist dabei in eine Ringstufe 78 des ersten Gehäuseteils 4 eingesetzt.

## Patentansprüche

1. Stellvorrichtung zum mechanischen Betätigen einer Komponente einer Maschine (2),
- mit einem Gehäuse (3), das ein erstes Gehäuseteil (4) und ein zweites Gehäuseteil (5) aufweist,
- mit einem im Gehäuse (3) angeordneten Elektromotor (6) zum Antreiben eines außen am Gehäuse (3) angeordneten Stellglieds (7) zum Koppeln mit der zu betätigenden Komponente,
- mit einem im Gehäuse (3) ausgebildeten Kühlkanal (33) für ein flüssiges Kühlmittel, der mit einem außen am Gehäuse (3) vorgesehenen Kühlmitteleinlassanschluss (34) und mit einem außen am Gehäuse (3) vorgesehenen Kühlmittelauslassanschluss (35) fluidisch verbunden ist,
- wobei der Elektromotor (6) einen in Umfangsrichtung (13) umlaufenden Mantel (51) aufweist, im zweiten Gehäuseteil (5) angeordnet ist und zumindest mit seiner Antriebswelle (10) axial in das erste Gehäuseteil (4) hineinragt,
- wobei der Kühlkanal (33) am zweiten Gehäuseteil (5) vorgesehen ist, **dadurch gekennzeichnet,**
- **dass** das erste Gehäuseteil (4) aus Kunststoff hergestellt ist,
- **dass** in das zweite Gehäuseteil (5) eine Blechschale (41) axial eingesetzt ist,
- **dass** der Elektromotor (6) in die Blechschale (41) axial eingesetzt ist,
- **dass** der Kühlkanal (33) radial zwischen der Blechschale (41) und dem zweiten Gehäuseteil (5) ausgebildet ist,
- **dass** ein den Elektromotor (6) in Umfangsrichtung (13) umschließender Mantel (42) der Blechschale (41) radial am Mantel (51) des Elektromotors (6) direkt anliegt,
- **dass** das zweite Gehäuseteil (5) aus Kunststoff hergestellt ist,
- **dass** der Kühlkanal (33) radial außen direkt durch eine den Elektromotor (6) in Umfangsrichtung (13) umschließende Umfangswand (40) des zweiten Gehäuseteils (5) begrenzt ist,
- **dass** der Kühlmitteleinlassanschluss (34) an dem einen Gehäuseteil (4, 5) vorgesehen ist, während der Kühlmittelauslassanschluss (35) am anderen Gehäuseteil (4, 5) vorgesehen ist.

2. Stellvorrichtung nach Anspruch 1,
**dadurch gekennzeichnet,**
**dass** der Kühlkanal (33) radial innen direkt durch einen den Elektromotor (6) in Umfangsrichtung (13) umschließenden Mantel (42) der Blechschale (41) begrenzt ist.

3. Stellvorrichtung nach Anspruch 1 oder 2,
**dadurch gekennzeichnet,**
**dass** die Blechschale (41) topfförmig ausgestaltet ist und an einer vom ersten Gehäuseteil (4) abgewandten Seite durch einen Boden (43) axial verschlossen ist.

4. Stellvorrichtung nach einem der vorhergehenden Ansprüche,
**dadurch gekennzeichnet,**
**dass** die Blechschale (41) einen Aufnahmeraum (44) bildet, in den der Elektromotor (6) axial eingesteckt ist und der nur an einer dem ersten Gehäuseteil (4) zugewandten Seite offen ist.

5. Stellvorrichtung nach einem der vorhergehenden Ansprüche,
**dadurch gekennzeichnet,**
- **dass** die Blechschale (41) an einer dem ersten Gehäuseteil (4) zugewandten Seite einen radial nach außen abstehenden, umlaufenden Kragen (45) aufweist,
- **dass** der Kühlkanal (33) axial an einer dem ersten Gehäuseteil (4) zugewandten Seite durch den Kragen (45) direkt begrenzt ist.

6. Stellvorrichtung nach Anspruch 5,
**dadurch gekennzeichnet,**
- **dass** das zweite Gehäuseteil (5) an einer dem ersten Gehäuseteil (4) zugewandten Seite einen umlaufenden Flansch (46) aufweist,
- **dass** sich der Kragen (45) radial bis in den Bereich des Flansches (46) erstreckt und axial am Flansch (46) anliegt.

7. Stellvorrichtung nach einem der vorhergehenden Ansprüche,
**dadurch gekennzeichnet,**
**dass** der Kühlkanal (33) axial an einer vom ersten Gehäuseteil (5) abgewandten Seite durch eine umlaufende Ringstufe (50) des zweiten Gehäuseteils (5) direkt begrenzt ist.

8. Stellvorrichtung nach einem der vorhergehenden Ansprüche,
**dadurch gekennzeichnet,**
- **dass** mehrere primäre Befestigungsstellen (12) zum Befestigen des Gehäuses (3) an der Maschine (2) vorgesehen sind,
- **dass** wenigstens eine sekundäre Befestigungsstelle (14) zum Befestigen des ersten Gehäuseteils (4) am zweiten Gehäuseteil (5) vorgesehen ist,
- **dass** die primären Befestigungsstellen (12), wenn damit das Gehäuse (3) an der Maschine (2) befestigt ist, zusätzlich zur wenigstens einen sekundären Befestigungsstelle (14) das erste Gehäuseteil (4) am zweiten Gehäuseteil (5) befestigen.

## Claims

1. Actuating device for mechanically actuating a component of a machine (2),
- comprising a housing (3), which has a first housing part (4) and a second housing part (5),
- an electric motor (6) arranged in the housing (3) for driving an actuator (7) arranged on the outside of the housing (3) for coupling with the component to be actuated,
- a cooling channel (33) formed in the housing (3) for a liquid coolant, which is fluidically connected to a coolant inlet connection (34) provided on the outside of the housing (3) and to a coolant outlet connection (35) provided on the outside of the housing (3),
- wherein the electric motor (6) has a casing (51) in circumferential direction (13), is arranged in the second housing part (5) and projects axially into the first housing part (4) at least with its drive shaft (10),
- wherein the cooling channel (33) is provided on the second housing part (5),
**characterised in that**
- the first housing part (4) is made of plastic,
- a sheet metal shell (41) is inserted axially into the second housing part (5),
- the electric motor (6) is inserted axially in the sheet metal shell (41),
- the cooling channel (33) is formed radially between the sheet metal shell (41) and the second housing part (5),
- a casing (42) of the sheet metal shell (41) surrounding the electric motor (6) in circumferential direction (13) bears directly radially on the casing (51) of the electric motor (6),
- the second housing part (5) is made of plastic,
- the cooling channel (33) is delimited radially on the outside directly by a peripheral wall (40) of the second housing part (5) surrounding the electric motor (6) in circumferential direction (13),
- the coolant inlet connection (34) is provided on one housing part (4, 5), whereas the coolant outlet connection (35) is provided on the other housing part (4, 5).

2. Actuating device according to claim 1,
**characterised in that**
- the cooling channel (33) is delimited radially on the inside directly by a casing (42) of the sheet metal shell (41) surrounding the electric motor (6) in circumferential direction (13).

3. Actuating device according to claim 1 or 2,
**characterised in that**
- the sheet metal shell (41) is designed to be pot-shaped and is axially closed by a bottom (43) on a side facing away from the first housing part (4).

4. Actuating device according to any of the preceding claims,
**characterised in that**
- the sheet metal shell (41) forms a receiving space (44) into which the electric motor (6) is inserted axially and which is open only on a side facing the first housing part (4).

5. Actuating device according to any of the preceding claims,
**characterised in that**
- the sheet metal shell (41) has a circumferential collar (45) projecting radially outwards on a side facing the first housing part (4),
- the cooling channel (33) is directly delimited axially by the collar (45) on a side facing the first housing part (4).

6. Actuating device according to claim 5,
**characterised in that**
- the second housing part (5) has a circumferential flange (46) on a side facing the first housing part (4),
- the collar (45) extends radially into the region of the flange (46) and bears axially on the flange (46).

7. Actuating device according to any of the preceding claims,
**characterised in that**,
the cooling channel (33) is directly delimited axially on a side facing away from the first housing part (5) by a circumferential annular step (50) of the second housing part (5).

8. Actuating device according to any of the preceding claims,
**characterised in that**,
- a plurality of primary fastening points (12) are provided for fastening the housing (3) to the machine (2),
- at least one secondary fastening point (14) is provided for fastening the first housing part (4) to the second housing part (5),
- the primary fastening points (12), when the housing (3) is fastened thereby to the machine (2), in addition to the at least one secondary fastening point (14), fasten the first housing part (4) to the second housing part (5).

## Revendications

1. Dispositif de réglage pour l'actionnement mécanique d'un composant d'une machine (2),
- avec un carter (3) qui présente une première partie de carter (4) et une seconde partie de carter (5),
- avec un moteur électrique (6) agencé dans le carter (3) pour l'entraînement d'un organe de réglage (7) agencé à l'extérieur au niveau du carter (3) pour le couplage avec le composant à actionner,
- avec un canal de refroidissement (33) réalisé dans le carter (3) pour un moyen de refroidissement liquide qui est relié de manière fluidique à un raccord d'entrée de moyen de refroidissement (34) prévu à l'extérieur au niveau du carter (3) et à un raccord de sortie de moyen de refroidissement (35) prévu à l'extérieur au niveau du carter (3),
- dans lequel le moteur électrique (6) présente une enveloppe (51) périphérique dans le sens périphérique (13), est agencé dans la seconde partie de carter (5) et pénètre au moins avec son arbre d'entraînement (10) axialement dans la première partie de carter (4),
- dans lequel le canal de refroidissement (33) est prévu au niveau de la seconde partie de carter (5),
**caractérisé en ce**
- **que** la première partir de carter (4) est fabriquée en matière plastique,
- **qu'**une coque de tôle (41) est insérée axialement dans la seconde partie de carter (5),
- **que** le moteur électrique (6) est inséré axialement dans la coque de tôle (41),
- **que** le canal de refroidissement (33) est réalisé radialement entre la coque de tôle (41) et la seconde partie de carter (5),
- **qu'**une enveloppe (42) entourant le moteur électrique (6) dans le sens périphérique (13) de la coque de tôle (41) repose directement radialement contre l'enveloppe (51) du moteur électrique (6),
- **que** la seconde partie de carter (5) est fabriquée en matière plastique,
- **que** le canal de refroidissement (33) est délimité radialement à l'extérieur directement par une paroi périphérique (40) enfermant le moteur électrique (6) dans le sens périphérique (13) de la seconde partie de carter (5),
- **que** le raccord d'entrée de moyen de refroidissement (34) est prévu au niveau de l'une partie de carter (4, 5) alors que le raccord de sortie de moyen de refroidissement (35) est prévu au niveau de l'autre partie de carter (4, 5).

2. Dispositif de réglage selon la revendication 1,
**caractérisé en ce**
**que** le canal de refroidissement (33) est délimité radialement à l'intérieur directement par une enveloppe (42) enfermant le moteur électrique (6) dans le sens périphérique (13) de la coque de tôle (41).

3. Dispositif de réglage selon la revendication 1 ou 2,
**caractérisé en ce**
**que** la coque de tôle (41) est configurée en forme de pot et est fermée axialement au niveau d'un côté éloigné de la première partie de carter (4) par un fond (43).

4. Dispositif de réglage selon l'une des revendications précédentes,
**caractérisé en ce**
**que** la coque de tôle (41) forme un espace de réception (44), dans lequel le moteur électrique (6) est enfiché axialement et qui est ouvert seulement au niveau d'un côté tourné vers la première partie de carter (4).

5. Dispositif de réglage selon l'une des revendications précédentes,
**caractérisé en ce**
- **que** la coque de tôle (41) présente au niveau d'un côté tourné vers la première partie de carter (4) un collet (45) périphérique, dépassant radialement vers l'extérieur,
- **que** le canal de refroidissement (33) est délimité directement axialement au niveau d'un côté tourné vers la première partie de carter (4) par le collet (45).

6. Dispositif de réglage selon la revendication 5,
**caractérisé en ce**
- **que** la seconde partie de carter (5) présente au niveau d'un côté tourné vers la première partie de carter (4) une bride périphérique (46),
- **que** le collet (45) s'étend radialement jusque dans la zone de la bride (46) et repose axialement contre la bride (46).

7. Dispositif de réglage selon l'une des revendications précédentes,
**caractérisé en ce**
**que** le canal de refroidissement (33) est délimité directement axialement au niveau d'un côté éloigné de la première partie de carter (5) par un gradin annulaire (50) périphérique de la seconde partie de carter (5).

8. Dispositif de réglage selon l'une des revendications précédentes,
**caractérisé en ce**
- **que** plusieurs points de fixation (12) primaires sont prévus pour la fixation de carter (3) à la machine (2),
- **qu'**au moins un point de fixation (14) secondaire est prévu pour la fixation de la première partie de carter (4) à la seconde partie de carter (5),
- **que** les points de fixation (12) primaires lorsque le carter (3) est fixé à la machine (2) avec ceux-ci, fixent outre au moins un point de fixation (14) secondaire la première partie de carter (4) à la seconde partie de carter (5).
